# EUROPEAN PATENT APPLICATION

(11) **EP 1 758 123 A1**
(43) Date of publication of application: **28.02.2007**
(21) Application number: 05750832.7
(22) Date of filing: 14.06.2005
(51) Int. Cl.: G11B 27/10, G11B 20/10, H04N 5/76, H04N 5/783

(54) **RECORDING/REPRODUCING DEVICE, RECORDING/REPRODUCING METHOD, AND PROGRAM RECORDING MEDIUM**

(30) Priority: 14.06.2004 JP 2004176146
(71) Applicant: SONY CORPORATION, Tokyo 141-0001 (JP)
(72) Inventor: YOSHIDA, Yonako, SONY CORPORATION, Tokyo 141-0001 (JP); YOSIHIRO, Tositaka, SONY CORPORATION, Tokyo 141-0001 (JP); KAGEYAMA, Akane, SONY CORPORATION, Tokyo 141-0001 (JP)
(74) Representative: Robinson, Nigel Alexander Julian
(86) International application number: PCT/JP2005/010886
(87) International publication number: WO 2005/122176

(57) **Abstract**

Disclosed is a recording/reproducing apparatus in which a rotary head records digital data in tracks inclined to the lengthwise direction of a magnetic tape and reproduces the digital data recorded in the inclined tracks. In a reproducing system (20), the capstan-servo operation unit (71) locks the phase in ±24-times fast reproduction so that the rotary head may trace and reproduction search data. That is, the phase is locked at an inclined track of a specified track number. It is then determined whether the search data has been detected. If the search data is not acquired, the magnetic tape is fed in a prescribed direction. The phase at the next error-correction block is thereby locked. This process is repeated twice at the position remotest from a target position. Then, the phase is locked when the search data is acquired.

## Description

### Technical Field

The present invention relates to a recording/reproducing apparatus, a recording/reproducing method and a program-recorded medium, each for recording or reproducing digital data, by using a rotary head, in or from inclined tracks that are formed and inclined to the lengthwise direction of a magnetic tape.

This application is based upon and claims the benefit of priority from the prior Japanese Patent Application No. 2004-176146, filed June 14, 2004, the entire contents of which are incorporated herein by reference.

### Background Art

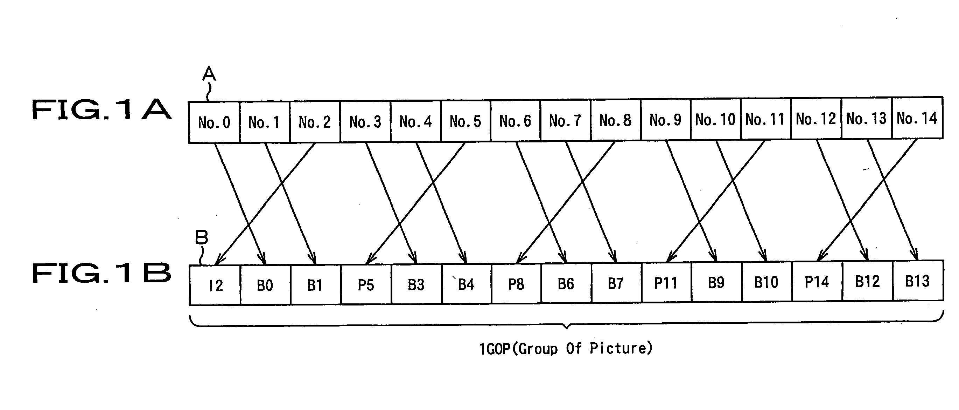

In digital video tape recorders, video data is compressed in, for example, MPEG (Moving Picture Experts Group) format and recorded in a magnetic tape. FIG 1A and FIG 1B show an example of video data compressed in MPEG format, with 15 frames of the video stream data treated as a GOP (Group of Pictures). FIG 1A depicts the original video data including video data items arranged in time sequence. No. 0 to No. 14 indicate the serial numbers of frames of the video data.

FIG 1B shows video data compressed in MPEG format, which corresponds to the video data A shown in FIG 1A and which includes three types of pictures, i.e., I pictures (Intra Coded Pictures), P pictures (Predictive Coded Pictures) and B pictures (Bidirectionally Coded Pictures). In the video data B, the numbers assigned to the I pictures, P pictures and B pictures indicate the numbers of frames of the original video data A.

I picture is video data compressed within the frame. That is, I picture I2 of the video data B, for example, which is located at the leftmost position in FIG 1B, is video data obtained by compressing only the frame No. 2 of the video data A shown in FIG 1A.

P picture is video data obtained by compression with using not only video data within the frame, but also the video data of the I picture or P picture that precedes the video data within the frame. For example, P picture P5 of the video data B is video data obtained by compressing the video data of the frame No. 5 and I picture 12 that precedes the video data within the frame.

Each B picture shown in FIG 1B is obtained by compression with using not only video data within the frame, but also the video data of the I picture and P picture preceding and following the video data within the frame. For example, B picture B0 of the video data B is video data obtained by compressing the video data of the frame No. 0 shown in FIG 1A, I picture I2 that precedes the video data and P picture P5 Nat follows the video data.

Thus, any I picture has been obtained by compressing the video data of one frame. Video data can therefore be expanded from I picture only. By contrast, video data cannot be expanded from any P picture or any B picture only, because the I picture or P picture preceding or following the video data, or both the I picture and P picture, are needed.

The video data A shown in FIG 1A is thus compressed, generating the video data B shown in FIG 1B. The video data B, thus obtained, is recorded on a magnetic tape. The video data B is read from the tape, in the order the data items have been recorded by a magnetic head.

To reproduce the video data compressed in MPEG format and recorded on the magnetic tape, at a varied speed, the magnetic head reads the video data from the tracks that alternately differ in azimuth angle. The video data thus reproduced is therefore an intermittent signal. If the magnetic head intermittently reads the video data, such as P picture or B picture that cannot be expanded by itself, from the magnetic tape, the image cannot be reproduced because there are no image that should be referred to.

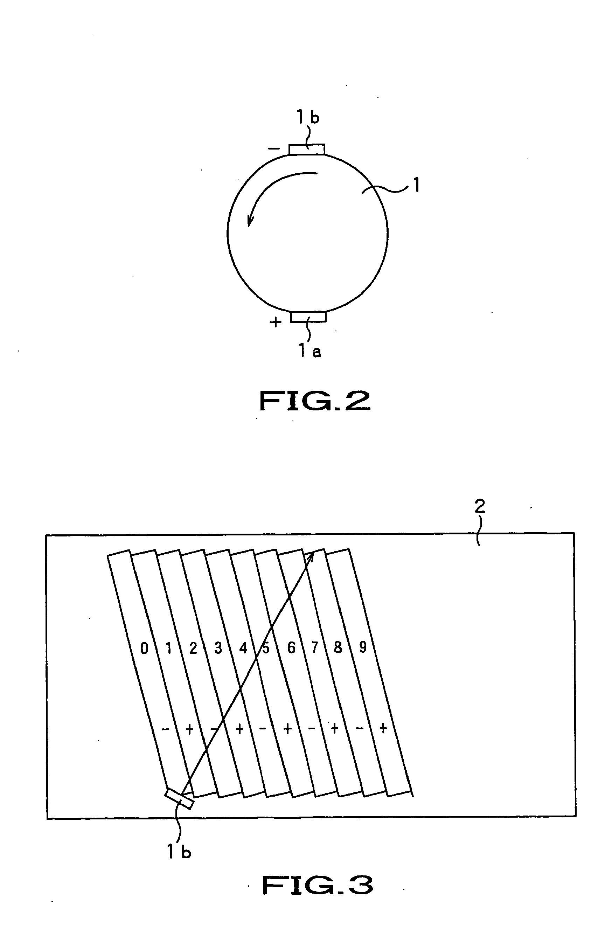

That is, as FIG 2 shows, two rotary heads 1a and 1b are arranged on a drum 1, symmetrical with respect to the axis of the drum 1, each having a predetermined azimuth angle. Here, the rotary heads are so secured to the drum 1 that one rotary head 1a has a positive (+) azimuth angle and the other rotary head 1b has a negative (-) azimuth angle. As FIG 3 shows, data is recorded in each track that inclines to the lengthwise direction of the magnetic tape 2. The number assigned to each band-shaped track in FIG 3 is the truck number. Any track assigned with sign "+" is a track in and from which the rotary head 1 a having a positive (+) azimuth angle can record and reproduce video data. Any track assigned with sign "-" is a track in and from which the rotary head 1b having a negative (-) azimuth angle can record and reproduce video data. The rotary heads 1 a and 1b are magnetic heads. In the normal reproduction, the tracks corresponding to the azimuth of each track are reproduced one after another. To reproduce the video data 9 times faster, however, the magnetic tape 2 is fed faster than in the normal reproduction. Hence, the rotary head 1b shown in FIG 3, which has a negative (-) azimuth angle moves in the direction of the arrow over the magnetic tape 2.

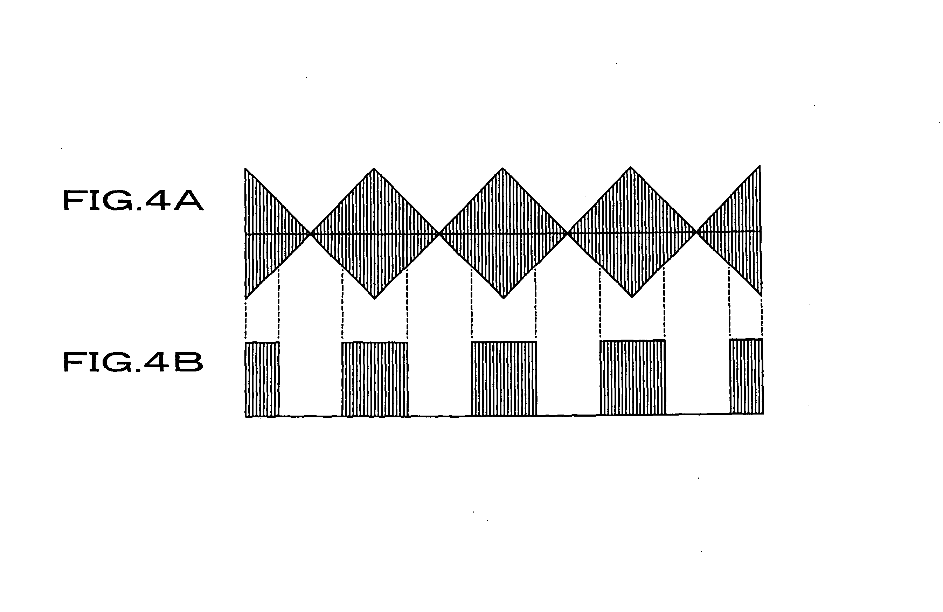

At this time, the other rotary head 1b scans the magnetic tape 2, alternately detecting signals of the positive (+) azimuth angle and signals of the negative (-) azimuth angle. As a result, the radio-frequency (RF) signal that the other rotary head 1b outputs is such a signal as shown in FIG 4A.

Assume that, of the RF signal shown in FIG 4A, the part whose magnitude has lowered to 6 dB can be reproduced, as well. Then, the signal reproduced will be such an intermittent signal as shown in FIG 4B. Consequently, the data required for expanding B pictures or P pictures cannot always be read out in the varied-speed reproduction.

Therefore, in the varied-speed reproduction, the magnetic head is located at a predetermined position over the magnetic tape, thereby reading only the video data of I pictures, as video data for the varied-speed reproduction. Thus, only I pictures are continuously read, accomplishing the varied-speed reproduction. In this case, the video tape recorder detects the rotation cycle of a capstan motor that runs the magnetic tape, finds a speed error, i.e., the difference between the rotation cycle detected and the reference cycle previously stored. In accordance with the speed error, the rotation speed of the capstan motor is controlled so that the magnetic head may detect only the video data of I pictures on the magnetic tape.

In the conventional recorder that records video data on a magnetic tape, as data compressed in, for example, MPEG format, so-called search video data is recorded at a position that the rotary head can trace in the search reproduction so that the searching video data may be reproduced at a speed other than the normal speed. Hence, when the search reproduction is performed at a predetermined speed, the search video data is read from the tape, whereby the search image is displayed.

To make the recording/reproducing apparatus to perform the search function, it is desired that the tape be fed 24 times as fast as in the normal reproduction, on the basis of the relation between the number of updated frames (i.e., the number of search frames) or the intervals of images and the time required to search the whole magnetic tape. If the tape is fed 24 times as fast, each frame displayed corresponds to the number of frames that are displayed for 2 seconds at the normal reproduction speed.

In the 24-times fast reproduction, the video data is reproduced in units of three error-correction (ECC: Error-Correcting Code) blocks. (The data is reproduced in units of 48 tracks, because one ECC block is composed of 16 tracks.) Therefore, an optimum tracking system is required.

To achieve a reliable phase locking at a very high speed, it is desired that the recording-phase information (an ECC-unit, 3-scale counter or a track-unit, 48-scale counter), for example, be recorded in all sync blocks (hereinafter referred to as SBs). In this method, however, the bits available but in a limited number can hardly be allocated. Hence, the overall efficiency will decrease if ID bits, for example, are used in increased numbers. Alternatively, the recording-phase information may be repeatedly recorded so that the phase may be locked at any pattern (in units ofECCs). This method, however, increases the search data three times and reduces the rate of main video, inevitably imposing an adverse influence on the quality of image.

Another method has been proposed, in which tracking information is recorded in the control track that extends in the lengthwise direction of the magnetic tape. This method requires too high a cost to be employed in the public-use DV format

Jpn. Pat. Appln. Laid-Open Publication No. 2003-169285 discloses a method in which the information representing the search-data recording position is recorded in a sub-code remote from the search data and is tracked. In this method, the search video data for the 24-times fast reproduction is recorded at every 48 tracks. A sub-code, 3-scale counter that indicates the position where the search data is recorded is allocated in the sub-code data. The same data is recorded three times in the sub-code sync block of the title time code. Further, the count made by the 3-scale counter is used as information representing the phase servo for search. The search pattern for the 24-times fast reproduction can be phase-locked reliably

Jpn. Pat. Appln. Laid-Open Publication No. 2002-216433 discloses a method in which a 2-bit information is used, enabling a 3-scale counter to count the ECC blocks, and the 3-scale counter is recorded in sub-code data with an extra recording area, thereby building a virtual 48-scale counter.

As indicated above, the 24-times fast search pattern (tracking) is reproduced in units of 48 tracks for every 3 ECC blocks. Hence, the tracking control can not be accomplished if only the track-pair number for the 16-times fast reproduction and 32-times fast reproduction is expanded. In the 8-times fast reproduction, the rated track-pair number contains search data. Therefore, the track-pair number is used as the target position of tracking. In the 24-times fast reproduction, if the tracking is performed as the same method with the 8-times fast reproduction, the correct tracking is performed at a position of the search data, at the probability of one to three.

In any recording/reproducing apparatus wherein the rotary head records and reproduces digital data in and from the inclined tracks of the magnetic tape, the magnetic tape does not contact the rotary head well at a position at which the tape is leaving the drum. Therefore, 2-bit data for counting the ECC blocks is in 3-scale may be used and this 3-scale counter may be recorded in a sub-code data having an extra recording area, thereby providing a virtual 48-scale counter that performs tracking. This method, however, cannot reliably guarantee the acquisition of the sub-code data recorded near the position at which the tape is leaving the drum. Consequently, correct position information cannot be obtained, inevitably degrading the tracking precision.

### Disclosure of Invention

### Problems to be solved by the Invention

In view of the above-mentioned problems with the conventional art, an object of the present invention is to provide a recording/reproducing apparatus in which a rotary head records digital data in tracks inclined to the lengthwise direction of a magnetic tape and reproduces the digital data recorded in the inclined tracks and phase locking can be performed with high precision in 24-times fast mode, without using sub-code data.

In a recording/reproducing apparatus according to this invention, rotary head records digital data in tracks inclined to the lengthwise direction of a magnetic tape and reproduces the digital data recorded in the tracks. The apparatus includes: a recording system having a first generating unit that decodes an input video signal and generates video data, and a second generating unit that generates search data from the video data, and a recording unit that records the video data and the search data on the inclined tracks of the magnetic tape; and a reproducing system having a normal reproducing unit that reproduces the video data and search data recorded on the inclined tracks of the magnetic tape, a determining unit that determines whether the search data intermittently reproduced from the tracks of the magnetic tape has been acquired in ±n-times fast reproduction, and a varied-speed reproduction control unit that performs a control, specifying, on the basis of an output of the determining unit, a position where the rotary head is now scanning the inclined tracks of the magnetic tape, locking the phase at ±n-times speed and causing the rotary head to trace the search data and reproducing the search data.

In a recording/reproducing method according to this invention, an input video signal is encoded, generating video data, and search data is generated from the video data, and a rotary head records the video data and the search data, as digital data, in the tracks formed on a magnetic tape and inclined to the lengthwise direction of the magnetic tape, and reproduces the digital data recorded in the inclined tracks. The method includes: determining whether the search data intermittently reproduced from the tracks of the magnetic tape has been acquired in ±n-times fast reproduction; specifying, on the basis of the determination result, a position where the rotary heads is now scanning the inclined tracks of the magnetic tape, locking the phase at ±n-times speed and causing the rotary head to trace the search data and reproducing the search data.

A program-recorded medium according to the present invention stores a computer-readable program for encoding an input video signal, generating video data from the input video signal, and generating search data from the video data, and causing a rotary head to record the video data and the search data, as digital data, in the tracks formed on a magnetic tape and inclined to the lengthwise direction of the magnetic tape, and reproducing the digital data recorded in the inclined tracks. The program includes the steps of: determining whether the search data intermittently reproduced from the tracks of the magnetic tape has been acquired in ±n-times fast reproduction; and specifying, on the basis of the determination result, a position where the rotary head is now scanning the inclined tracks of the magnetic tape, locking the phase at ±n-times speed and causing the rotary head to trace the search data and reproducing the search data.

In the recording/reproducing apparatus, a recording/reproducing method and a program-recorded medium, to which the present invention is applied, phase locking for 24-times speed can be achieved without using sub-code data. Since the sub-code data is recorded near the position at which the tape is leaving the drum, it may not be reliably read in the high-speed reproduction. Nonetheless, the phase can be reliably locked at a target position, by using the search-data acquisition information that is recorded in the middle part of the tape.

The other objects of the present invention and the advantages achieved by the invention will be apparent from the embodiments that will be described as follows, with reference to the accompanying drawings.

### Brief Description of Drawings

FIG 1A and FIG 1B are diagrams illustrating how video data is compressed in MPEG format ;
FIG 2 is a plan view showing a drum with rotary heads secured to it;
FIG 3 is a plan view of a magnetic tape from which the rotary heads may reproduce digital data;
FIG 4B and FIG 4B are diagrams depicting RF signals detected by the rotary heads;
FIG 5 is a block circuit diagram of an embodiment of the recording system incorporated in a digital video tape recorder applied with the present invention;
FIG 6 is a block circuit diagram of the reproducing system incorporated in the digital video tape recorder applied with the present invention;
FIG 7 is a block diagram of the component peripheral to the microcomputer incorporated in the video tape recorder;
FIG 8 is a diagram representing the format of YNC/ID detection request data;
FIG 9 is a diagram representing the format of SYNC/ID detection data;
FIG 10 is a diagram explaining how the rotary heads scan the data recorded on a magnetic tape;
FIG 11A to FIG 11E are diagrams depicting signals that are detected when the rotary heads scan the data recorded on a magnetic tape;
FIG 12 is a diagram explaining how the rotary heads scan the data recorded on the magnetic tape;
FIG 13A to 13N are diagrams showing the patterns of phase errors made when the rotary heads scan the data recorded on the magnetic tape;
FIG 14 is a block diagram showing a capstan-servo calculating unit provided in the video tape recorder,
FIG 15 is a flowchart showing a servo process performed in a varied speed reproduction;
FIG 16 is a flowchart showing a SYNC/ID detecting process;
FIG 17A to FIG 17C are diagrams explaining the SYNC/ID detecting process;
FIG 18A to 18G are diagrams explaining SYNC/ID detecting processes;
FIG 19A and FIG 19B are diagrams explaining SYNC/ID detecting processes;
FIG 20 is a diagram explaining a SYNC/ID detecting process;
FIG 21 is a diagram explaining a SYNC/ID detecting process;
FIG 22A to FIG 22G are diagrams schematically explaining a SYNC/ID detecting processes;
FIG 23 is a flowchart showing a latch-data generating process;
FIG 24A to FIG 24G are diagrams explaining the latch-data generating process;
FIG 25 is a flowchart explaining an error calculating process performed in a varied speed reproduction;
FIG 26 is a flowchart explaining a speed-error calculating process;
FIG 27A to FIG 27C are timing charts explaining the speed-error calculating process;
FIG 28 is a flowchart explaining a phase-error calculating process;
FIG 29 is a diagram explaining the phase-error calculating process;
FIG 30A to FIG 30C are diagrams explaining the phase-error calculating process;
FIG 31A to FIG 31C are timing charts explaining the phase-error calculating process;
FIG 32 is a diagram explaining a phase-error calculating process;
FIG 33 is a diagram explaining a phase-error calculating process;
FIG 34 is a diagram illustrating an area in which ±24-times fast search data is recorded;
FIG 35 is a diagram showing a trace pattern for the +24-times fast reproduction;
FIG 36 is a diagram showing a trace pattern for the -24-times fast reproduction;
FIG 37 is a diagram illustrating an algorithm for locking search data at the center;
FIG 38 is a diagram illustrating an algorithm for discriminating a positive lock and a pseudo lock;
FIG 39 is a flowchart showing the procedure of generating a phase error in the 24-times fast reproduction; and
FIG 40 is a flowchart showing the procedure of updating a pseudo-lock counter.

### Best Mode for Carrying out the Invention

An embodiment of the present invention will be described in detail, with reference to the accompanying drawings. The embodiment is the best mode of the present invention. It can be changed or modified in various ways, without departing the spirit of the present invention.

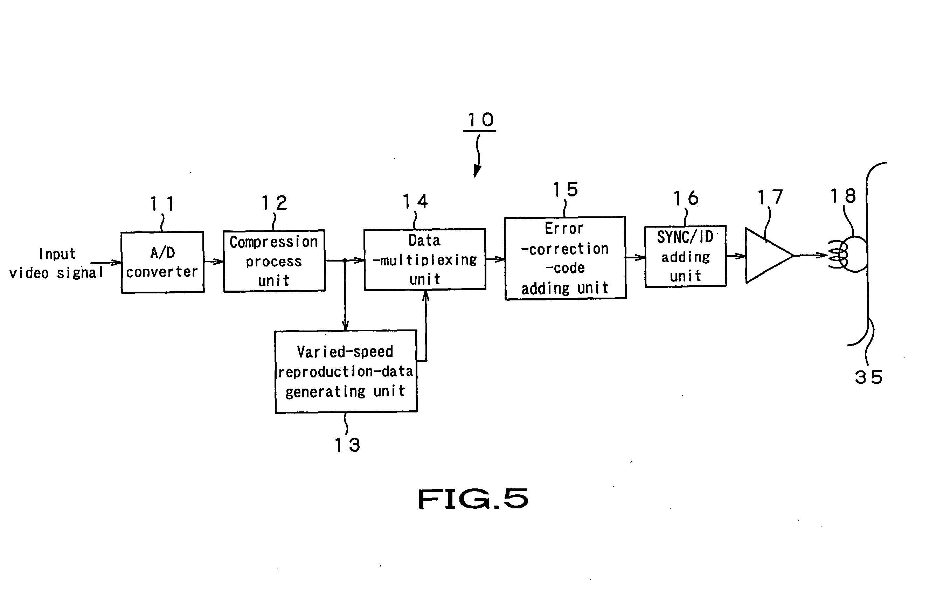

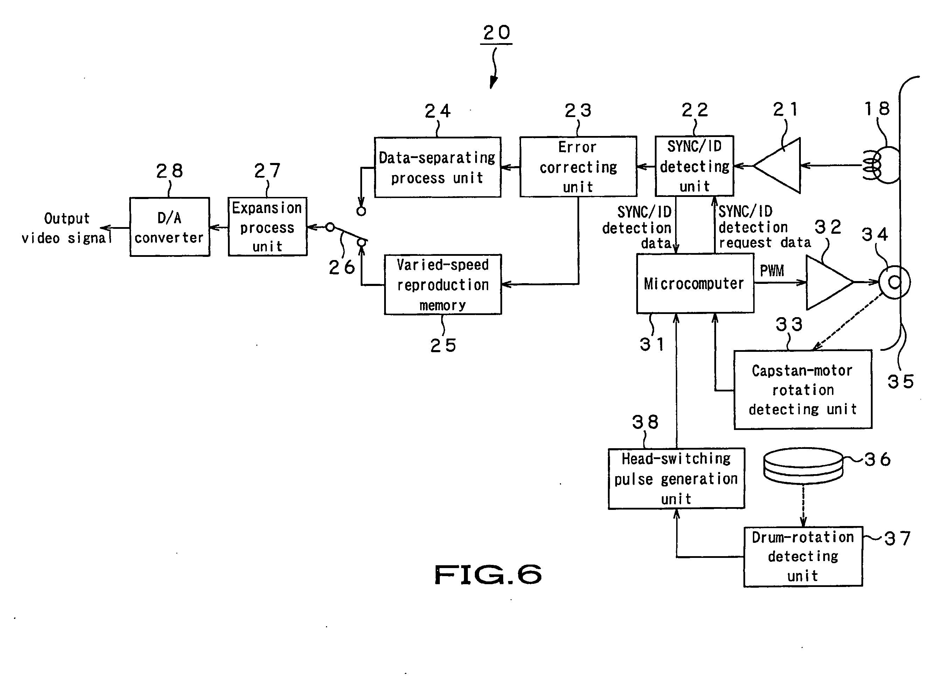

The embodiment of the present invention is applied to a video tape recorder that has a recording system 10 and a reproducing system 20, which are so configured as shown in FIG 5 and FIG 6, respectively.

As shown in FIG 5, the recording system 10 of this video tape recorder includes an A/D (Analog/Digital) converter 11, a compression process unit 12, a varied-speed reproduction-data generating unit 13, a data-multiplexing unit 14, an error-correction code adding unit 15, and a SYNC/ID (Synchronized Signal/Identified Number) adding unit 16. The A/D converter 11 converts an input analog video signal to a digital signal. The compression process unit 12 receives an input video data that is the digital data output from the A/D converter 11. The varied-speed reproduction-data generating unit 13 and the data-multiplexing unit 14 receive an input video data that is compressed data output from the compression process unit 12. The error-correction code adding unit 15 receives the multiplexed signal output from the data-multiplexing unit 14. The SYNC/ID adding unit 16 receives the multiplexed signal to which the error-correction code adding unit 15 has added an error-correction code. A record amplifier 17 amplifies the record signal supplied from the SYNC/ID adding unit 16. A rotary head 18 records the record signal in a magnetic tape 35.

In the recording system 10, the compression process unit 12 first performs DCT (Discrete Cosine Transformation) on the input digital video signal output from the A/D converter 11. The unit 12 then supplies compressed video data representing a plurality of frames, e.g., 15 frames, to the varied-speed reproduction-data generating unit 13 and the data-multiplexing unit 14.

The varied-speed reproduction-data generating unit 13 generates video data for varied-speed reproduction, from only the I-picture data included in the video data compressed in MPEG format and supplied from the compression process unit 12. The I-picture data has been obtained by intra-frame compression and can be expanded independently. The video data thus generated is supplied to the data-multiplexing unit 14.

The data multiplexing unit 14 receives video data from either the compression process unit 12 or the varied-speed reproduction-data generating unit 13. The unit 14 multiplexes this video data with audio data, a sub code and other system data, generating a multiplexed signal. The multiplexed signal is supplied to the error-correction code adding unit 15.

The error-correction code adding unit 15 adds an error-correction code to the multiplexed signal supplied from the data-multiplexing unit 14. The multiplexed signal having the error-correction code is supplied to the SYNC/ID adding unit 16.

The SYNC/ID adding unit 16 generates a record signal by adding the sync signals and IDs for respective sync blocks to the input signal. The record signal thus generated is supplied to the rotary head 18 through the record amplifier 17.

Each ID contains a synchronized block number (hereinafter referred to as SB No.) and a track number (hereinafter referred to as Tr No.). The SB No. is composed of numerals indicating the serial number of a sync (synchronized) block recorded in a track. The Tr No. is the serial number of the track in which the signal is recorded. Generally, digital signals are recorded in units of sync blocks. Therefore, the ID containing the SB No. and Tr No. is used as an address at which data is written in a buffer memory.

The record amplifier 17 amplifies the record signal supplied from the SYNC/ID adding unit 16 and supplies the same to the rotary head 18.

Then the rotary head 18 records the record signal supplied from the record amplifier 17 to the magnetic tape 35.

As shown in FIG 6, the reproducing system 20 of this video tape recorder comprises a SYNC/ID/search-data detecting unit 22, an error correcting unit 23, a microcomputer 31, a data-separating process unit 24, a varied-speed reproduction memory 25, a switch 26, an expansion process unit 27, a D/A (Digital/Analog) converter 28, a driver 32, a capstan motor 34, a capstan-motor rotation detecting unit 33, a drum-rotation detecting unit 37, and a head-switching pulse generating unit 38. The SYNC/ID/search-data detecting unit 22 receives, via a reproducing amplifier 21, a reproduced signal that the rotary head 18 has read from the magnetic tape 35. The error correcting unit 23 and the microcomputer 31 are connected to the SYNC/ID/search-data detecting unit 22. The data-separating process unit 24 and the varied-speed reproduction memory 25 are connected to the error correcting unit 23. The expansion process unit 27 is selectively connected by the switch 26 to the varied-speed reproduction memory 25. The D/A converter 28 is connected to the expansion process unit 27. The driver 32 is connected to the microcomputer 31. When driven by the driver 32, the capstan motor 34 runs the magnetic tape 35. The capstan-motor rotation detecting unit 33 detects the rotation of the capstan motor 34. The drum-rotation detecting unit 37 detects the rotation of the rotary drum 36. The head-switching pulse generating unit 38 is connected to the drum-rotation detecting unit 37. The microcomputer 31 controls the rotation of the capstan motor 34. The direction and speed in and at which the magnetic tape 35 is running are thus controlled. Data is thereby reproduced in normal reproduction mode or varied-speed reproduction mode.

In the reproducing system 20, the SYNC/ID/search-data detecting unit 22 receives a SYNC/ID/detection request data from the microcomputer 31. The unit 22 detects the SB contained in the reproduced signal supplied via the reproducing amplifier 21 and corresponding to the SYNC/ID/detection request data. The unit 22 reads Tr No. and SB No. from the ID of the SB, stores them in a register for each block, and supplies them as SYNC/ID detection data to the microcomputer 31. The unit 22 supplies the video data to the error correcting unit 23. Moreover, the SYNC/ID/search-data detecting unit 22 has a function of generating search-data acquisition information that shows whether or not the search data has been acquired and a function of supplying this information to the microcomputer 31.

The SYNC/ID detection request data and the SYNC/ID detection data will be described later. Tr No. may be recorded in the form of, for example, a track pair including two tracks that correspond to a positive (+) azimuth angle and a negative (-) azimuth angle, respectively. In this case, Trp (Track Pair) No. is used in place ofTr No. The two tracks may be identified with the signs "+" and "-" assigned to their azimuth angles. A case where Trp No. is used instead ofTr No. will be described below.

The error correcting unit 23 performs a correction process on the reproduced data supplied from the SYNC/ID/search-dala detecting unit 22. In the normal reproduction, the error correcting unit 23 supplies the corrected reproduced data to the data-separating process unit 24. In the varied-speed reproduction, the unit 23 supplies the corrected reproduced data to the varied-speed reproduction memory 25.

The data-separating process unit 24 separates the video data, audio data, sub-code and other system data, which are contained in the reproduced data (i.e., multiplexed signal) supplied from the SYNC/ID/search-data detecting unit 22.

The audio data that the data-separating process unit 24 has separated from the reproduced data is supplied to an audio process circuit (not shown). The sub-code and the system data are supplied to the microcomputer 31. The video data that the data-separating process unit 24 has separated from the reproduced data is supplied to via the switch 26 to the expansion process unit 27 in the normal reproduction.

The varied-speed reproduction memory 25 is a buffer memory that is used in the varied-speed reproduction. It temporarily stores the video data supplied from the error correcting unit 23, which is to be reproduced at a varied speed. In the varied-speed reproduction, the video data to be reproduced at a varied speed is read from the varied-speed reproduction memory 25 and supplied via the switch 26 to the expansion process unit 27.

The varied-speed reproduction memory 25 is available in two types. One type temporarily stores the input video data and outputs the data in units of frames. The other type outputs a video signal as every time another video signal is stored into it. Whichever type of a memory can be used.

The switch 26 is so controlled by the microcomputer 31 that video data obtained by the data-separating process unit 24 is selected in the normal reproduction and video data temporarily stored in the varied-speed reproduction memory 25 is selected in the varied-speed reproduction.

The expansion process unit 27 performs an expansion process on the compressed video data supplied via the switch 26, i.e., the video data compressed in MPEG format. Further, it performs inverse DCT transformation on the video data thus expanded, generating reproduced video data. The reproduced video data is supplied to the D/A converter 28.

The D/A converter 28 receives the reproduced video data from the expansion process unit 27 and converts it to an analog signal. The analog signal is output, as an original video signal to a television receiver (not shown) or the like, which displays images.

The microcomputer 31 generates a PWM (Pulse Width Modulation) signal that controls the rotation of the capstan motor 34. The PWM signal is generated from Trp No. and SB No., both contained in the SYNC/ID detection data supplied from the SYNC/ID/search-data detecting unit 22, and from the capstan-motor rotation detection pulse supplied from the capstan-motor rotation detecting unit 33. The PWM signal is supplied to the driver 32.

The diver 32 drives the capstan motor 34 in accordance with the PWM signal supplied from the microcomputer 31.

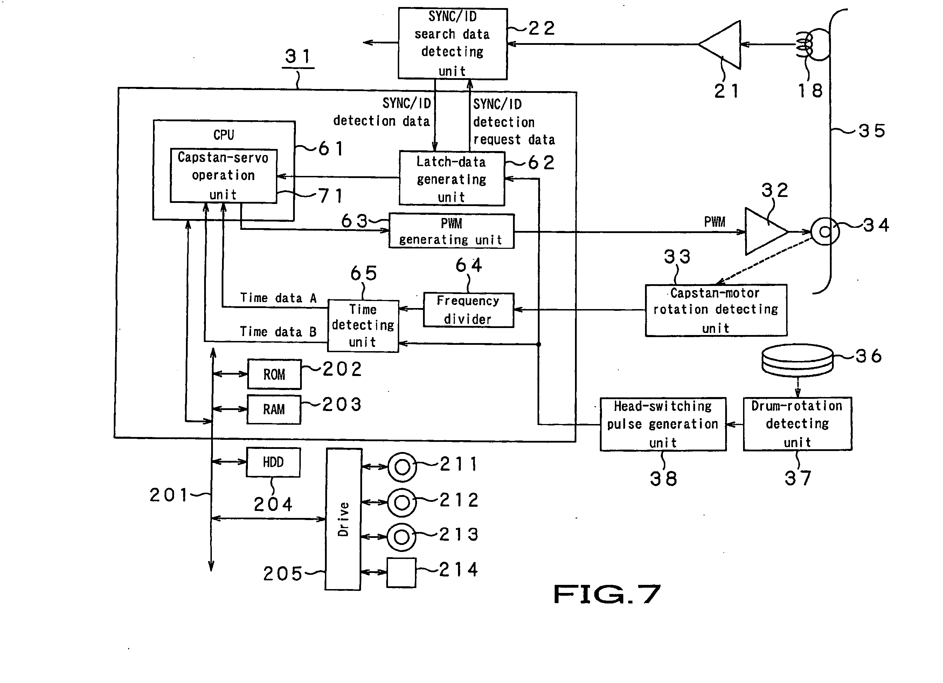

The microcomputer 31, driver 32, capstan-motor rotation detecting unit 33, capstan motor 34 and head-switching pulse generating unit 38 will be described in detail, with reference to FIG 7.

In response to the SYNC/ID detection request data supplied from the latch-data generating unit 62 of the microcomputer 31, the SYNC/ID/search-data detecting unit 22 detects SB No. and Trp No. of the video signal input from the reproducing amplifier 21. The unit 22 supplies these data items, as SYNC/ID detection data, to the latch-data generating unit 62. The SYNC/ID/search-data detecting unit 22 generates search-data acquisition information showing whether search data has been acquired. This information is supplied to the latch-data generating unit 62.

In the microcomputer 31, a CPU (Central Processing Unit) 61 controls the other components of the microcomputer 31. The CPU 61 reads the content (program) of a capstan-servo operation unit 71, which is stored in a ROM (Read Only Memory) 202 that is connected to a bus 201. The CPU 61 executes the program thus read. Whenever necessary, the CPU 61 reads various programs stored in an HDD (Hard Disc Drive) 204 and stores them into a RAM 203 and directly executes these programs. Further, the CPU 61 reads, as needed, the programs stored in a magnetic disc 211, an optical disc 212 and an optomagnetic disc 213 set in a drive 205 and the programs stored in a semiconductor memory 214, and executes these programs.

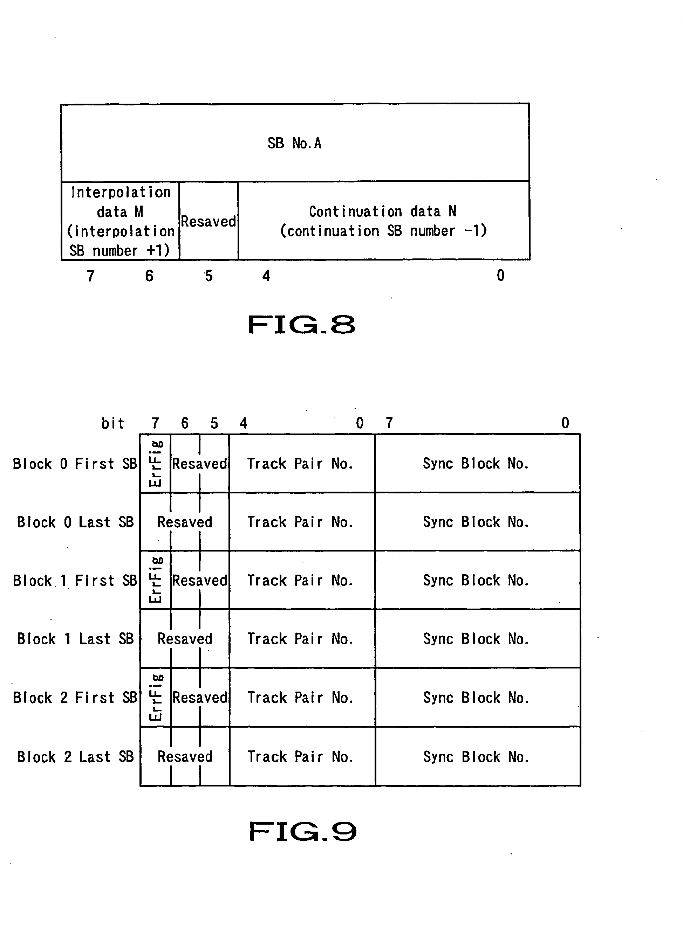

The latch-data generating unit 62 supplies to the SYNC/ID/search-data detecting unit 22 a request for the data that the driver 32 needs in order to control the rotation of the capstan motor 34 in the varied-speed reproduction. The request is supplied as SYNC/ID detection request data of such a format as shown in FIG 8. The unit 62 receives SYNC/ID detection data corresponding to the SYNC/ID detection request data, from the SYNC/ID/search-data detecting unit 22. The unit 62 generates latch data from the SYNC/ID detection data. The latch data is output to the capstan-servo operation unit 71. The latch-data generating unit 62 finds the average value of latch data (and stores the same in it). If the SYNC/ID detection data corresponding to the SYNC/ID detection request data is not complete, or if the data is insufficient, the unit 62 generates latch data from the average value. The average value may be a prescribed fixed value.

As shown in FIG 8, the SYNC/ID detection request data is constituted by, in total, 16 bits. The eight bits in the upper part in FIG 8 represent SB No. A that indicates the data-acquisition start position, i.e., data-acquisition area. The lower five bits (0 to 4) in the lower part represent continuation data N (continuous SB number-1) that designates the number of continuous SBs of data blocks that should be detected. The upper two bits (6 and 7) in the lower part constitute interpolation data M (interpolation SB number -1) that indicates the SB number that can be interpolated. The term "data block" is a block constituted by continuous SBs. A data block is, for example, a bar shown in FIG 4B, that defines the leading edge and the trailing edge.

The data-acquisition area (SB No. A) is information that shows the data-acquisition start position at which the SYNC/ID/search-data detecting unit 22 can start acquiring data. It is information requesting that the detection of the Ath SB should be started after a head-switching pulse rises, that is, the rotary head 18 has started reading data. More specifically, SB No. A designates a position before the SB to be detected by the SYNC/ID/search-data detecting unit 22 (i.e., SB including the data representing the I picture that is indispensable for the varied-speed reproduction). Designating the position, SB No. A indicates that any SB prior to it need not be read out. The latch-data generating unit 62 supplies a head-switching pulse, too, to the SYNC/ID/search-data detecting unit 22. This pulse has been supplied to the unit 62 from the head-switching pulse generating unit 38. SB No. A changes in value in accordance how many times the data is processed faster than the normal speed.

The continuation data N is information that designates the number of continuous SBs that constitute the data block for the rotary head 18 to read on one track. N is data representing the value one (1) less than the number of continuous SBs. The latch-data generating unit 62 generates latch data from three data blocks, i.e., three SBs continuously detected after SB No. A mentioned above. The SYNC/ID/search-data detecting unit 22 compares the number of continuously detected SBs with the value of the continuation data N, determining whether or not a data block has been constituted.

The interpolation data M is data that represents the number of SBs that can be interpolated if any SBs are missing or have not been detected, in the process of constituting the above-mentioned data block. Data M is a value one (1) greater than the number of interpolation SBs. Note that the fifth bit in the lower part shown in FIG 8 (i.e., the sixth bit as counted from the rightmost bit in FIG 8) is a reserved area.

Next, the SYNC/ID detection data will be explained, with reference to FIG 9.

The SYNC/ID detection data is the data the SYNC/ID/search-data detecting unit 22 outputs to the microcomputer 31 in response to the SYNC/ID detection request data that is shown in FIG 8. As FIG 9 shows, the SYNC/ID detection data is composed of six 16-bit data items, the first item being the uppermost and the sixth item being the lowermost The first data item represents the first and last positions of the first data block (i.e., Block 0 that is detected first after the detection of SBs is started with SB No. A). The second data item represents the first and last positions of the second data block (i.e., Block 1, or the second block detected after the detection of SBs is started with SB No. A). The third data item represents the first and last positions of the third data block (i.e., Block 2, or the third block detected after the detection of SBs is started with SB No. A). Of the data representing the first position of each of the first, third and fifth data blocks shown in FIG 9, the first eight bits represent SB No., the next five bits represent Trp No., and the last two bits define a reserved area. Of this data, the leftmost bit in FIG 9 is an error flag. The error flag is 1 if the data has been detected, and is 0 in any other cases. Of the data representing the last position of each of the second, fourth and sixth data blocks shown in FIG 9, the first eight bits represent SB No., the next five bits represent Trp No., and the last three bits define a reserved area.

In accordance with the SYNC/ID detection request data described above, the SYNC/ID/search-data detecting unit 22 starts reading data at the position where SB No. A has been detected. It then detects three continuous data blocks including a track pair each. In the case of, for example, the Xth data block (initial value for X is 0) counted from SB No. A, Trp No. and SB No. at the first and last positions, respectively, are stored in the register FX at the first position and the register LX at the last position. Finally, the unit 22 generates SYNC/ID detection data from the contents of the registers FX and LX for the three data blocks. The SYNC/ID detection data is output to the latch-data generating unit 62.

A PWM generating unit 63 receives the data input from the capstan-servo operation unit 71 and controlling the rotation of the capstan motor 34. The unit 63 performs pulse width modulation (PWM) on this data, generating a PWM output. The PWM output is supplied to the driver 32. In the n-times fast reproduction, for example, a frequency divider 64 receives a capstan-motor rotation detection pulse from the capstan-motor rotation detecting unit 33 and divides this pulse by n, thus generating a pulse waveform. A signal representing the pulse waveform is output to a time detecting unit 65.

The drum-rotation detecting unit 37 detects the rotation of the rotary drum 36 and generates a detection signal. The detection signal is output to the head-switching pulse generating unit 38. The head-switching pulse generating unit 38 generates a head-switching pulse from the signal input from the drum-rotation detecting unit 37. The head-switching pulse is output to the time detecting unit 65.

The time detecting unit 65 detects the time corresponding to the leading edge of the pulse input from the frequency divider 64 and the time corresponding to the leading edge of the head-switching pulse input from the head-switching pulse generating unit 38. The unit 65 outputs time data to the capstan-servo operation unit 71. In practice, the time detecting unit 65 generates a count value that circulates at relatively long intervals. In FIG 7, time data A represents the time that corresponds to the leading edge of the pulse input from the frequency divider 64, and time data B represents the time that corresponds to the leading edge of the head-switching pulse.

The capstan-servo operation unit 71 is a program stored beforehand in the ROM 202. The unit 71 generates a signal for controlling the rotation of the capstan motor 34, from the latch data based on the information about the three blocks (SB No. at and the first position and SB No. at the last position) and supplied from the latch-data generating unit 62, and from the time data about the edges of various pulses and input from the time detecting unit 65.

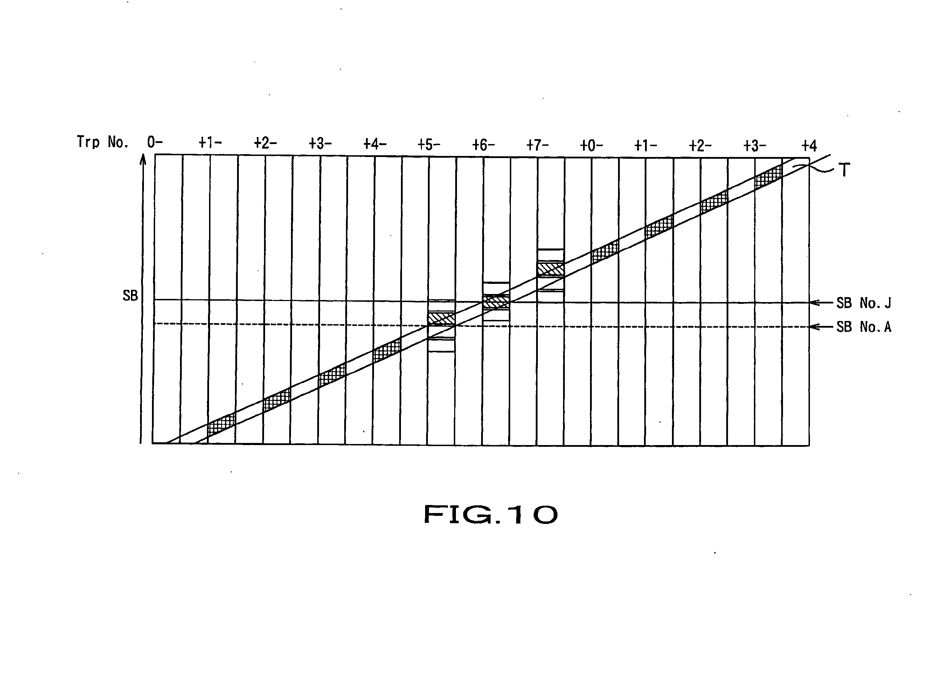

The principle of the servo process that the microcomputer 31 performs for the capstan motor 34 in the varied-speed reproduction will be explained, with reference to FIG 10 to FIG 12. To perform, for example, 24-times fast reproduction, it is ideal that the rotary head 18 having a negative (-) azimuth angle should read data from the magnetic tape 35, i.e., the SBs recorded in only one of the paired tracks, which is assigned to the negative azimuth angle, while the rotary head 18 is moving on the scan phase T to the upper-right corner of the diagram of FIG 10.

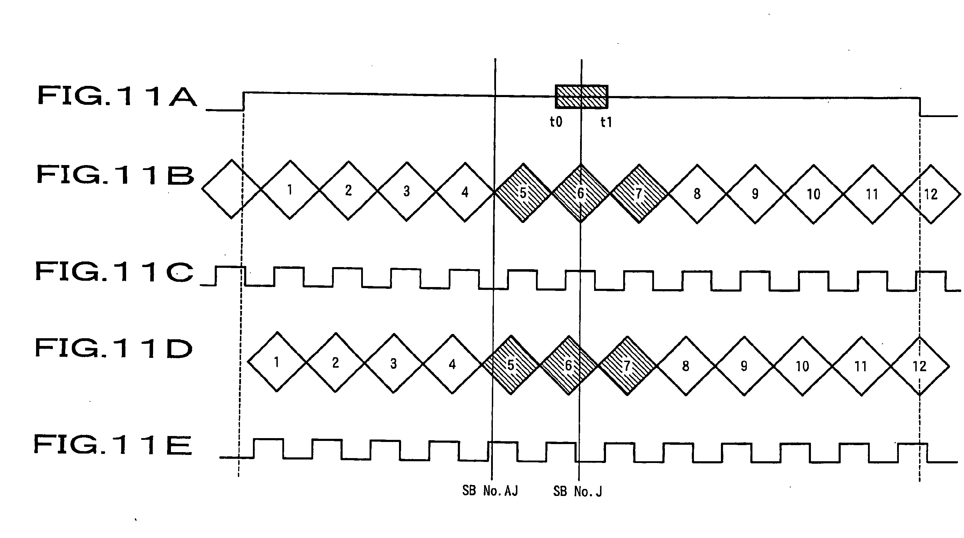

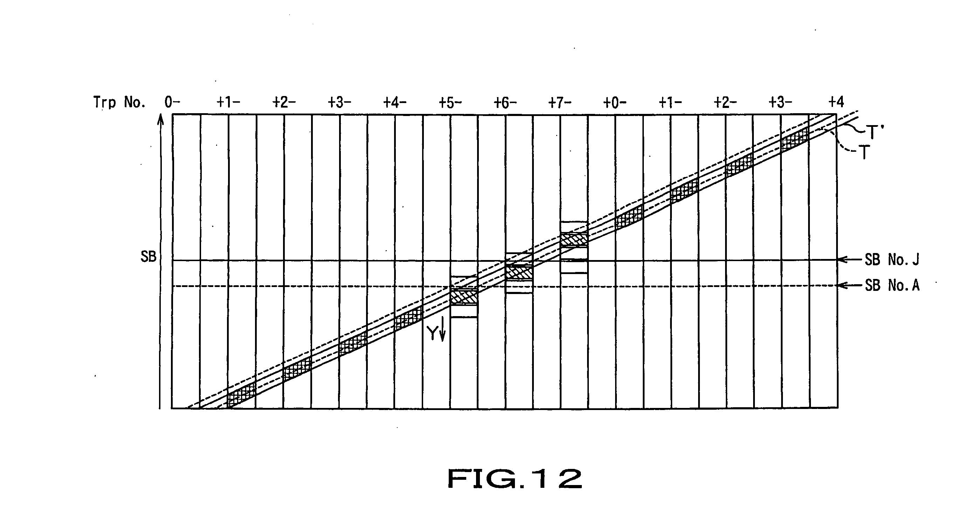

Assume that SB Nos. are assigned in ascending order from the bottom and that the target SB to read is No. J on Trp No. 6, or the Jth SB from the bottom (i.e., SB at the midpoint between the top and bottom of FIG 10). The head-switching pulse, RF signal and reproduced-data signal generated in this case are illustrated in FIG 11A, FIG 11B and FIG. 11C. The rectangles on any track, shown in FIG 10 and FIG 12, indicate data blocks. SB No. J, which is the Jth SB on Trp No. 6, from the bottom, is indicated by the rectangle located at the middle in Trp No. 6 in FIG 10.

In the case shown in FIG 10, SB No. J, i.e., target SB, will be read at the midpoint of the middle data block on the track that has a negative (-) azimuth angle and is identified with Trp No. 6 as indicated in FIG 11B. In practice, however, this scan phase T may shift to the left or the right, causing an error.

Thus, the microcomputer 31 determines the shift of data in units of Trp Nos. and the shift of data in units of SB Nos, on the basis of Trp Nos. of three continuous data blocks, the middle of which is SB No. J, and the SB No. of the middle SB. In accordance with one of the shifts of data, thus determined, the microcomputer 31 controls the capstan motor 34. The position of the scan phase T is thereby controlled in units of Trp Nos. (that is, in units of data blocks) or in units of SBs.

As shown in FIG 10, SB No. A described above is set as the SB located at the first position, which should therefore be read first on the data block corresponding to Trp No. 5. Hence, if the rotary head 18 scans the tape along a scan phase T' deviated from the scan phase T (shown in FIG 11A, FIG 11B and FIG 11C) to the right as illustrated in FIG 12 (if the magnetic tape 35 runs rather fast and the data-reading is delayed in time), the data-reading position will shift backwards as shown in FIG 11D and FIG 11E. Consequently, the Ath SB (i.e., SB No. A), counted from the head-switching pulse, will be delayed with respect to the SB at the first position of the data block that corresponds to Trp No. 5. Similarly, the target SB, i.e., SB No. J, will be read as SB located at a position behind the SB at the first position of the data block that corresponds to Trp No. 6. As a result, the position of the data block that should be read shifts downwards, decreasing the SB No., in the direction of arrow Y in FIG 12.

The microcomputer 31 controls the capstan motor 34 on the basis of this shift of the data block, in order to lower the speed at which the magnetic tape 35 is running. More specifically, in the case shown in FIG 12, the microcomputer 31 controls the rotation of the capstan motor 34 in accordance with the shift in units of SBs if the target SB No. J lies within the data block, though it is deviated from the middle position of the target data block as illustrated in FIGS. 11D and 11E. If the target SB No. J is detected outside the target data block (i.e., a data block on Trp No. 6), the microcomputer 31 controls the capstan motor 34 in units of data blocks, namely in units of Trp Nos.

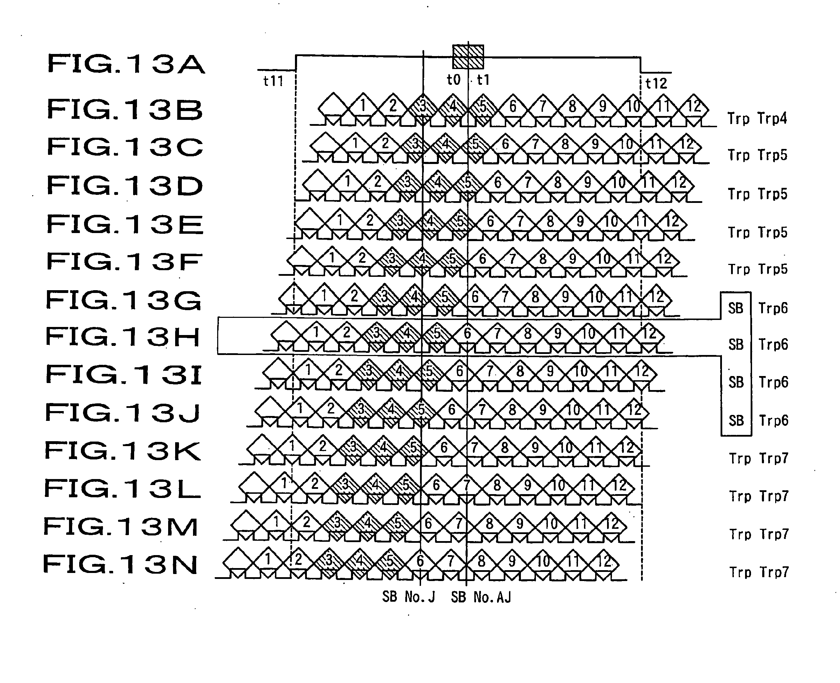

FIG 13A to FIG 13N are diagrams showing patterns, or relation between the timing of reading RF signals and reproduced signals at various running speeds of the magnetic tape 35 and the control performed in units of SB Nos. or Trp Nos. FIG 13A shows the head-switching pulse, indicating that the SB read during the period between time t0 to time t1 is data reproduced. FIGS. 13B to 13N are timing charts, each showing a control method (in units of Trp Nos. or in units of SBs) at the right-hand side, and the Trp No. for the very SB being read, on the right side of the control method. In FIG 13A to FIG 13N, the number assigned to any RF signal or any reproduced signal (SB-detection signal) is the corresponding Trp No.

In the case of, for example, FIG 13B, the running speed of the magnetic tape 35 is low. The data reading starts early, and an SB in a data block corresponding to Trp No. 4 is read as target SB. In this case, the reading position has shifted more than the Trp width (the width of the data block). Therefore, the shift is controlled in units of Trp Nos.

In the cases of FIG 13C to FIG 13F, too, the running speed of the magnetic tape 35 is low. The data reading is not so early as in the case of FIG 13B, and an SB in the data block corresponding to Trp No. 5 is read as target SB. The reading position has shifted more than the Trp width. Hence, the shift is controlled in units of Trp Nos.

In the case of FIG 13G, the running speed of the magnetic tape 35 is low, too. Nonetheless, the delay of the data reading is small, compared to the cases of FIG 13B to FIG 13F, and an SB in the data block corresponding to Trp No. 6 is read as target SB. The shift of the reading position falls within the Trp width. The shift is therefore controlled in units of SB Nos.

In the case of FIG. 13H, the SB at the target position is read at the target timing.

In the cases of FIG 13I and FIG 13J, the running speed of the magnetic tape 35 is too high. The data reading timing is therefore delayed. Nonetheless, an SB in the block corresponding to Trp No. 6 is read out. The shift of the reading position falls within the Trp width. Hence, the shift is controlled in units of SB Nos.

In the cases of FIG 13K to FIG 13N, the running speed of the magnetic tape 35 is even higher. The data-reading timing is delayed more than in the cases of FIG 13I and FIG 13J. An SB in the block corresponding to Trp No. 7 is read out as the target position SB. The shift of the reading position is greater than the Trp width. The shift is therefore controlled in units of Trp Nos.

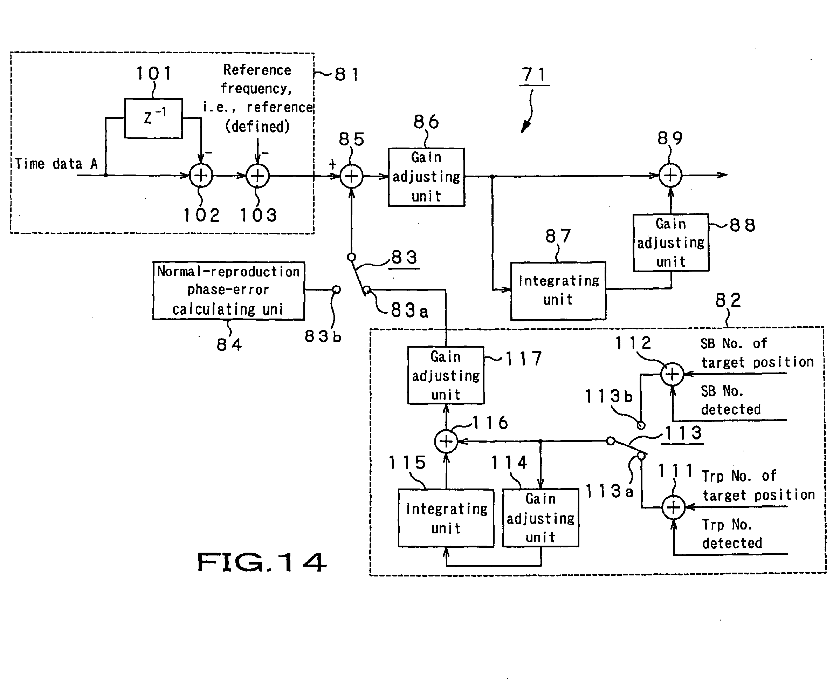

The control system provided in the capstan-servo operation unit 71 will be described, with reference to the block diagram of FIG 14. The following description is based on the assumption that the capstan-servo operation unit 71 is constituted by a program but not limited, thereto, and the unit 71 can be constituted by hardware.

The capstan-servo operation unit 71 is composed of a speed-error calculating unit 81, a phase-error calculating unit 82, and a normal-reproduction phase-error calculating unit 84.

The speed-error calculating unit 81 detects the actual rotation cycle (speed) of the capstan motor 34, finds the difference between the rotation cycle and the reference rotation cycle and generates a servo signal representing this difference. The speed-error calculating unit 81 receives time data A from the time detecting unit 65 and supplies the time data A to a buffer 101 and a subtracting unit 102. The buffer 101 delays the time data A by a prescribed time (the time duration from the previous process through the present process) and then outputs the time data A to the subtracting unit 102.

The subtracting unit 102 finds the difference between the time data A input from the time detecting unit 65 and the time data A input from the buffer 101 (i.e., immediately preceding time data A). The unit 102 thus calculates the present rotation cycle of the capstan motor 34 and outputs the data representing this rotation cycle, to a subtracting unit 103.

The subtracting unit 103 finds the difference between the present rotation cycle of the capstan motor 34, input from the subtracting unit 102, and the reference rotation cycle for the capstan motor 34 (i.e., reference cycle (constant)) stored in the ROM 202. The subtracting unit 103 outputs the data representing this difference, as a speed error, to an adding unit 85.

The phase-error calculating unit 82 calculates a phase error from the latch data supplied from the latch-data generating unit 62, in units of Trps or SBs. The phase error is the difference between the position of the target data area for varied-speed reproduction (i.e., the data area in which the I-picture video data to be read is recorded) and the position of the data actually detected. That is, the phase-error calculating unit 82 calculates the phase error in units ofTrps if the positional difference between the target SB and the detected SB is equal to or greater than the Trp width as shown in FIGS. 13A to 13N. In the phase-error calculating unit 82, a switch 113 is connected to a terminal 113a, and a subtracting unit 111 finds, from the latch data, the difference between the Trp No., i.e., the target position read from the ROM 202, and the Trp No. of the track containing the detected SB. This difference is output, as a phase error calculated in units of Trps, via the switch 113 to again adjusting unit 114 and an adding unit 116. In the cases of FIG 13A to FIG 13N, the target Trp No. is Trp No. 6. In the case of FIG 13B, for example, the phase error in units ofTrps is 2 (= 6 - 4). In the cases of FIG 13C to FIG 13F, the phase error is 1 (= 6 - 5). In the cases of FIG 13G to FIG 13J, the phase error is 0 (= 6 - 6). Further, in the cases of FIG 13K to FIG 13N, the phase error is -1 (= 6-7).

If the Trp to which the SB detected belongs and the target Trp are made available in the process mentioned above, the movable contact of the switch 113 is switched from the terminal 113a to the terminal 113b in the cases of FIG 13G to FIG 13J. A phase error is thereby calculated in units of SBs. At this time, a subtracting unit 112 finds, from the latch data, the difference between SB No. of the target SB and the center SB No. in the data block detected, and calculates a phase error, i.e., a shift in units of SBs, from the difference thus found A signal representing the phase error is output via the switch 113 to the gain adjusting unit 114 and the adding unit 116.

The gain adjusting unit 114 adjusts the gain of the phase-error signal input from the subtracting unit 111 or the subtracting unit 112, generating a signal that represents the gain adjusted. This signal is input to an integrating unit 115. The integrating unit 115 performs integration on the input signal, generating a signal. This signal is output to the adding unit 116. The adding unit 116 adds the signal input from the subtracting unit 111 or the subtracting unit 112 to the signal output from the integrating unit 115, generating a signal. This signal is input to a gain adjusting unit 117. The gain adjusting unit 114, integrating unit 115 and adding unit 116 function as an LPF (Low Pass Filter), smoothing the phase-error signal input from the subtracting unit 111 or the subtracting unit 112. The adjusting unit 117 adjusts the gain of the signal input from the adding unit 116, generating a signal. This signal is output to the adding unit 85 through a switch 118 and a switch 83.

The switch 118 is provided to select a fixed error value that is 2% of the speed described later or a phase-error signal whose gain has been adjusted by the gain adjusting unit 114.

The normal-reproduction phase-error calculating unit 84 generates an error signal that is indispensable to the normal reproduction. The error signal is output through the switch 83 to the adding unit 85. The switch 83 has its movable contact connected to one terminal 83a in the varied-speed reproduction, thus outputting the phase-error signal supplied from the phase-error calculating unit 82 to the adding unit 85 in the varied-speed reproduction. The switch 83 has its movable contact connected to the other terminal 83b in the normal reproduction, thus outputting the normal-reproduction error signal supplied from the normal-reproduction phase-error calculating unit 84 to the adding unit 85.

The adding unit 85 adds the phase error for the varied-speed reproduction, input from the phase-error calculating unit 82, or the phase error for the normal reproduction, input from the normal-reproduction phase-error calculating unit 84, and the speed error supplied from the speed-error calculating unit 81. The adding unit 85 generates a sum signal. The sum signal is output to a gain adjusting unit 86.

The gain adjusting unit 86 adjusts the gain of the sum signal input from the adding unit 85, which represents the sum of the speed error and the phase error. The unit 86 generates a signal representing the gain adjusted This signal is output to an integrating unit 87 and an adding unit 89. The integrating unit 87, a gain adjusting unit 88 and the adding unit 89 smooth the signal input from the gain adjusting unit 86, generating servo data. The servo data is output to the PWM generating unit 63.

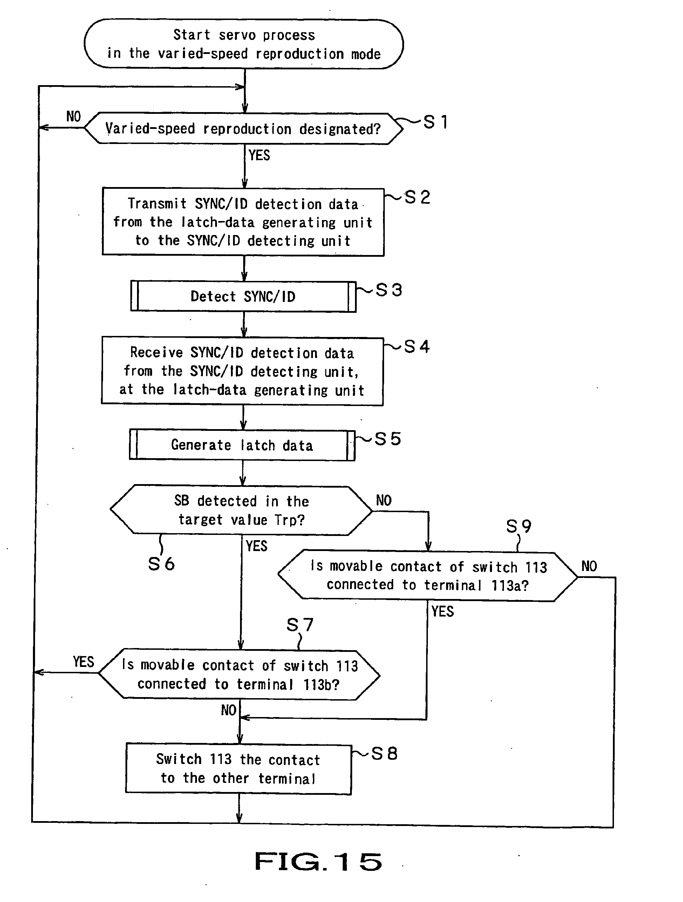

How the microcomputer 31 and the SYNC/ID/search-data detecting unit 22 perform a servo process in the varied-speed reproduction will be described, with reference to the flowchart of FIG. 15.

In Step S1, it is determined whether the varied-speed reproduction has been designated or not. Until the varied-speed reproduction is designated, Step S1 is repeated. For example, if the user operates an operation button (not shown), designating the varied-speed reproduction, the process goes to Step S2.

In Step S2, the latch-data generating unit 62 transmits SYNC/ID detection request data to the SYNC/ID/search-data detecting unit 22. In Step S3, the SYNC/ID/search-data detecting unit 22 performs a SYNC/ID detection process on the basis of the SYNC/ID detection request data transmitted from the latch-data generating unit 62.

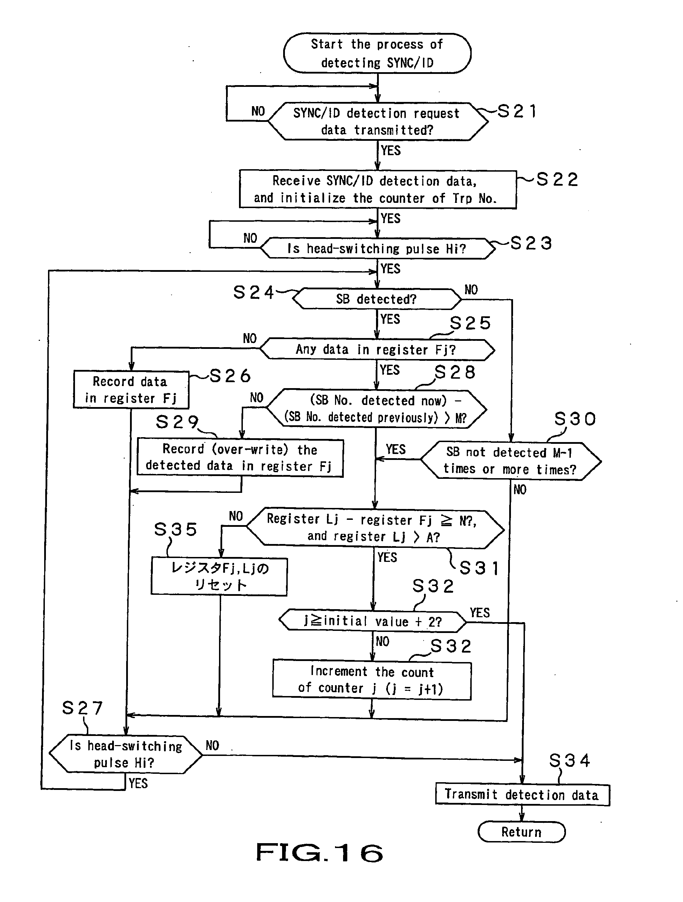

How the SYNC/ID/search-data detecting unit 22 performs the SYNC/ID detection process will be explained, with reference to the flowchart of FIG 16.

In Step S21, the SYNC/ID/search-data detecting unit 22 determines whether the SYNC/ID detection request data has been transmitted. Until the data is transmitted, Step S21 is repeated. For example, if it is determined in Step S2 (FIG 15) that the latch-data generating unit 62 has transmitted the SYNC/ID detection request data, the process goes to Step S22.

In Step S22, the SYNC/ID/search-data detecting unit 22 receives the SYNC/ID detection request data and initializes the counter j of the data block detected. That is, the counter j is initialized to 0 (j = 0).

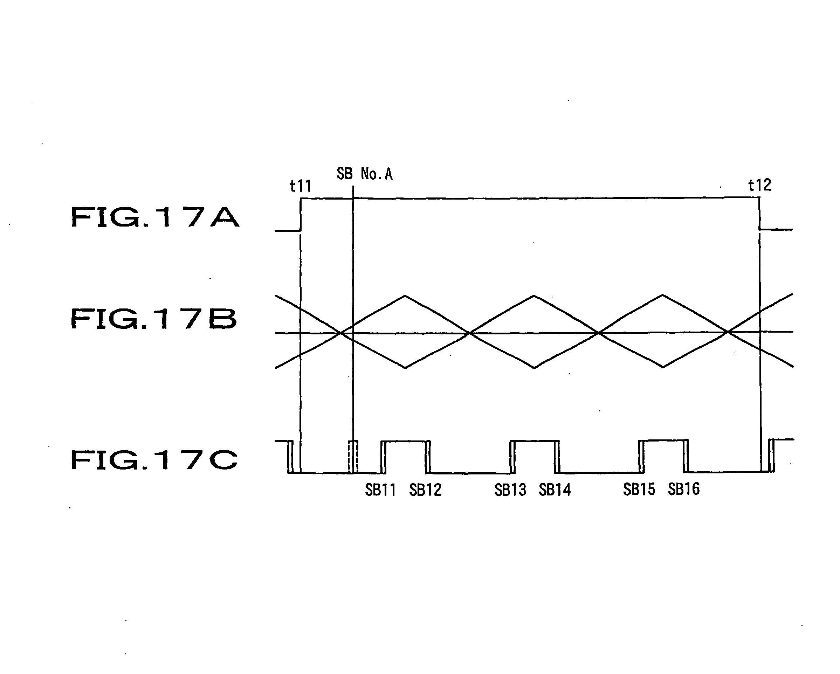

In Step S23, the SYNC/ID/search-data detecting unit 22 determines whether the head-switching pulse supplied from the latch-data generating unit 62 is Hi or not. Until the pulse is found to be Hi, Step S23 is repeated. For example, if the head-switching pulse changes to Hi at time t1 as is illustrated in FIG 17A, this event is detected. Then, the process goes to Step S24. FIG 17A shows the head-switching pulse, FIG 17B shows an RF signal, and FIG 17C shows an SB-detection signal.

In Step S24, the SYNC/ID/search-data detecting unit 22 determines whether an SB has been detected or not If SB 11 is detected as shown in, for example, FIG 17C, the process goes to Step 525. In this case, the head-switching pulse rises at time t1 as shown in FIG 17A. Thereafter, SB 11 is first detected after SB No. A, as is illustrated in FIG 17C.

In Step S25, the SYNC/ID/search-data detecting unit 22 determines whether a register Fj for storing the information about Block 0 First SB stores data or not Since j = 0, it is determined whether data exists in the register F0. There are no SBs detected before SB 11. Therefore, the register F0 stores no data. Hence, the process goes to Step S26.

In Step S26, the SYNC/ID/search-data detecting unit 22 stores the data representing SB No. and Trp No. of SB 11 into the register F0, in accordance with the ID of SB 11. Next, in Step S27, the SYNC/ID/search-data detecting unit 22 determines whether the head-switching pulse is Hi or not As shown in, for example, in FIG 17A, the head-switching pulse is Hi at the time SB 11 is detected. Hence, the process goes to Step S24.

In Step S24, it is determined whether an SB has been detected. If SB is detected after SB11 as shown in FIG 17B, the process goes to Step S25. In Step S25, it is determined whether the register Fj stores data. Since the register F0 stores the data about SB 11, it is determined that the register Fj stores data. The process goes to Step S28.

In Step S28, the SYNC/ID/search-data detecting unit 22 finds the difference between the SB No. of the SB detected this time and the SB No. of the SB previously detected and determines whether the difference is greater than interpolation data M. If the interpolation SB number is 1, the interpolation data M is 2 (= interpolation SB number +1). In this case, it is determined whether the difference is greater than 2. If SBs are continuously detected as shown in, for example, FIG 17C, the difference is 1. That is, the difference is determined not to be greater than 2. Then, the process goes to Step S29.

In Step S29, the SYNC/ID/search-data detecting unit 22 stores in the register Fj (that is, register L0) the SB No. and Trp No. of the SB detected after SB 11 based on the ID detected. The process then goes to Step S27. In Step S27, it is determined whether the head-switching pulse is Hi or not. In this case, the head-switching pulse is Hi as shown in FIG 17A. Hence, the process goes to Step S24.

In Step S24, it is determined whether the SB has been detected again. If the SB has been detected again as shown in FIG 17C, the process goes to Step S25. In Step S25, it is determined whether data is recorded in the register F0. Since data is recorded in the register F0, the process goes to Step S28.

In Step S28, the SYNC/ID/search-data detecting unit 22 finds the difference between the SB No. of the SB detected this time and the SB No. of the SB previously detected. The unit 22 then determines whether the difference is greater than the interpolation data M. In this case, SBs have been continuously detected. Hence, the difference is 1, smaller than the interpolation data M (= 2). The process therefore goes to Step S29. Namely, if the head-switching pulse remains Hi, Steps S24 to S29 are repeated after the first SB is stored into the register F0 in Step S26, until it becomes impossible to detect continuously as many SBs as the interpolation SBs or more SBs than the interpolation SBs. Thus, the data recorded in the register L0 is written over the data about the following SB.

It may be determined in Step S24 that no SBs have been detected any time after SB12 has been detected, as is illustrated in FIG 17C. If this is the case, the process goes to Step S30. In Step S30, the SYNC/ID/search-data detecting unit 22 determines whether no SBs have been detected (M-1) times or more times continuously. As shown in, for example, FIG 17C, SBs are not continuously detected after SB12 has been detected. Thus, no SBs have been detected more times than (M -1) times (that is, once (= M-1 = 2 -1)). During the period between SB12 and SB 13 shown in FIG 17C, for example, SBs are not continuously detected more than once. Hence, the process goes to Step S31.

In Step S31, the SYNC/ID/search-data detecting unit 22 determines whether the difference between the SB No. recorded in the register Lj and the SB No. recorded in the register Fj is equal to or greater than continuous data N (= number of continuous SBs-1) and whether the SB No. in the register L0 is equal to or greater than SB No. A, i.e., the borderline value. As shown in FIG. 17C, for example, SB 11 and SB 12 may be determined to be equal to or more than a prescribed number of continuous SBs, and the SB No. in the register L0 is equal to or greater than SB No. A, i.e., the borderline value. That is, a data block may be found to include more continuous SBs than a prescribed number. In this case, the process goes to Step S32.

In Step S32, the SYNC/ID/search-data detecting unit 22 determines whether the counter j has a count equal to or greater than the initial value of +2. Since the count of the counter j has the initial value, the process goes to Step S33. In Step S33, the SYNC/ID/search-data detecting unit 22 increments the counter j by one (1). The process returns to Step S27.

Thus, the data of the first block has been acquired in Step S33. The data to be stored in the registers F0 and L0 has been acquired. The value of the data is thereby ascertained. (Since the count has been incremented, data can be stored into registers F1 and L 1 that correspond to the next block.) As Steps S24 to S34, all described above, are repeated, the values stored in the registers F0 to F2 and registers L0 to L2 are determined.

In Step S32, the count of the counter j may be found to be equal to or greater than +2, i.e., the initial value. Then, in Step S34, the SYNC/ID/search-data detecting unit 22 transmits, to the latch-data generating unit 62, the values in the registers F0 to F2 and registers L0 to L2, as SYNC/ID detection data. The SYNC/ID/search-data detecting unit 22 thus finishes the process. That is, in the case shown in FIG 17C, Trp No. of the data block including SB 11 and SB 12 and the SB No. of SB 11 are recorded (in the register F0) as the SYNC/ID detection data, Block 0 First SB shown in FIG 9. Trp No. of the data block including SB11 and SB 12 and the SB No. of SB 12 are recorded (in the register L0) as Block 0 Last SB. Trp No. of the data block including SB 13 and SB 14 and the SB No. of SB13 are recorded (in the register F1) as Block 1 First SB. Trp No. of the data block including SB 13 and SB 14 and the SB No. of SB 14 are recorded (in the register L1) as Block 1 Last SB. Trp No. of the data block including SB15 and SB16 and the SB No. of SB 15 are recorded (in the register F2) as Block 2 First SB. Trp No. of the data block including SB 15 and SB16 and the SB No. of SB16 are recorded (in the register F2) as Block 0 Last SB.

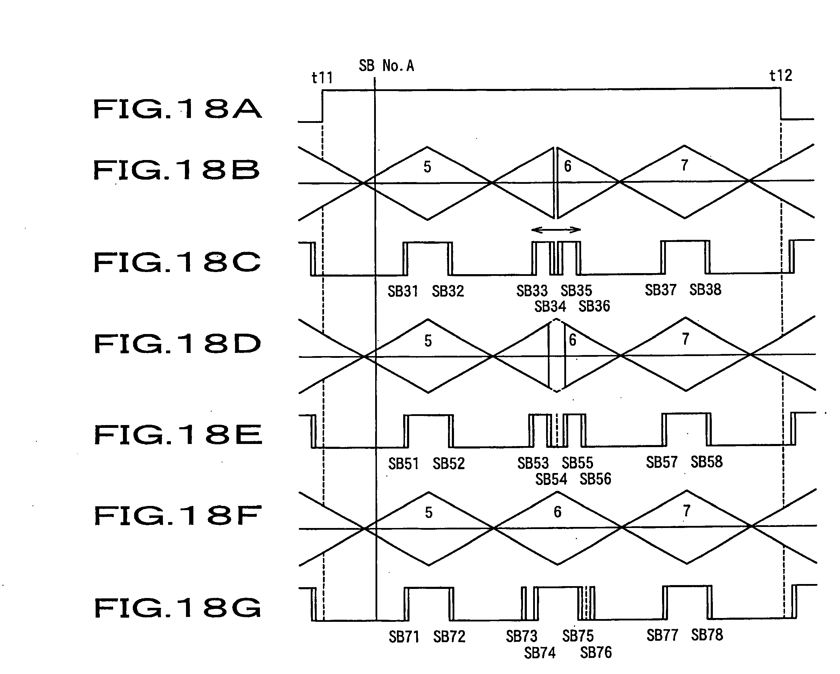

In Step S30 it may not be determined that no SBs have been continuously detected (M - 1) times or more times. In other words, it may be determined that the number of times no SBs have been detected is within the range of interpolation data M. If this is the case, the process returns to Step S27. Step S27 and the following steps are then repeated That is, if one SB, for example one of SB34 and SB35 that belong to the center data block, has not been detected as shown in FIG 18A to 18C, this SB can be interpolated. In this case, Steps S24 and S34 are repeated. In the case shown in FIG 18C, three data blocks, i.e., SB31 and SB32, SB33 to SB36, and SB37 and SB38 are detected. FIG 18A shows the head-switching pulse, FIG 18B shows an RF signal, and FIG 18C shows an SB-detection signal.

In Step 531, it may be determined that continuous SBs do not exceed a prescribed number or that the SB No. recorded in the register Lj is equal to or greater than SB No. A, i.e., the borderline value, the process goes to Step 535.

In Step S35, the SYNC/ID/search-data detecting unit 22 resets the registers Fj and Lj. The process then returns to Step S27. As shown in FIG 18D and FIG 18E, SBs as many as, or more than, the interpolation SBs (that is, one or more SBs) are not detected, like between SB54 and SB55 that belong to the center data block. Alternatively, the difference between the SB No. of the SB detected this time and the SB No. of the SB previously detected may be found in Step S28 to be greater than interpolation data M and the data block may not be constituted on the basis of the continuation data N. In either case, the unit 22 resets the values recorded in the registers Fj and Lj. That is, in the case of FIG 18D and FIG 18E, the data of S53 and SB54 is considered to constitute no data block and is discarded when SB55 is detected, if the interval between SB54 and SB55 is defined by more SBs than the interpolation SB number and the continuous SB number, i.e., SB53 and SB54, is not equal to N or more than N.

The continuous SB number, i.e., SB55 and SB56, is equal to or less than the prescribed number N. They are therefore reset in a similar way. As a result, in the case of the SB-detection signals shown in FIG 18D and FIG 18E, there are detected only two blocks, a block composed of SB51 and SB52 and a block composed of SB57 and SB58. The data blocks thus detected may not always be three blocks. In such a case, the SYNC/ID detection data shown in FIG 9 is stored, with its head part compressed. FIG 18D shows an RF signal, and FIG 18E shows an SB-detection signal.

In the case shown in FIG 18F and FIG 18Q the space between SB73 and SB74, at the center block, corresponds to one SB and is therefore interpolated. By contrast, the space between SB75 and SB76 corresponds to two SBs and cannot be interpolated. As a result, in the case of FIG. 18F and FIG 18G, SB73 to SB75 are regarded as center block. Note that SB 76 will be discarded in Step S35. FIG 18F shows an RF signal, and FIG 18G shows an SB-detection signal.

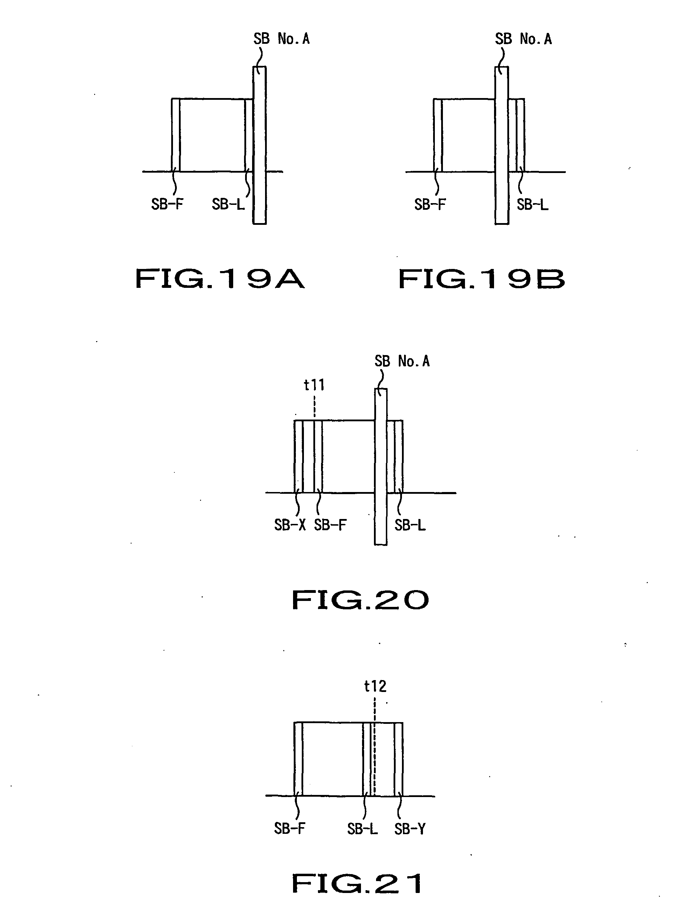

Further, it may not be determined in Step S31 that the SB No. in L0 is equal to or greater than SB No. A, i.e., the borderline value. In this case, too, the process goes to Step S35. In Step S35, the data in the registers Fj and Lj is discarded as described above. That is, as FIG 19A shows, SB-L is not detected if the data block including SB near the borderline of SB No. A. (In FIG 19AN SB-F and SB-L are the first SB and last SB of the data block, respectively.)

A data block may straddle the SB of SB No. A, as shown in FIG 19B. In this case, the first SB and last SB, i.e., SB-F and SB-L, are handled as a data block if they are satisfactory in terms of continuous SB number.

A data block may straddle both the SB of SB No. A and the head-switching pulse as is illustrated in FIG 20. In this case, the detection of SB is started when the head-switching pulse becomes Hi. Hence, SB-X existing at the head of the data block shown in FIG 20 is not detected, the first SB after time t1 1 when the head-switching pulse rises is detected as SB-F at the first position, and SB-L at the last position is detected. Thus, the data from SB-F to SB-L is read as data block.

A data block may extend over time t12 when the head-switching pulse rises, as shown in FIG 21. In this case, SB is detected only when the head-switching pulse is Hi. Therefore, only SB-F at the first position and SB-L immediately before time t12 are detected. SB-Y, i.e., SB at the very last position of the data block is not detected.

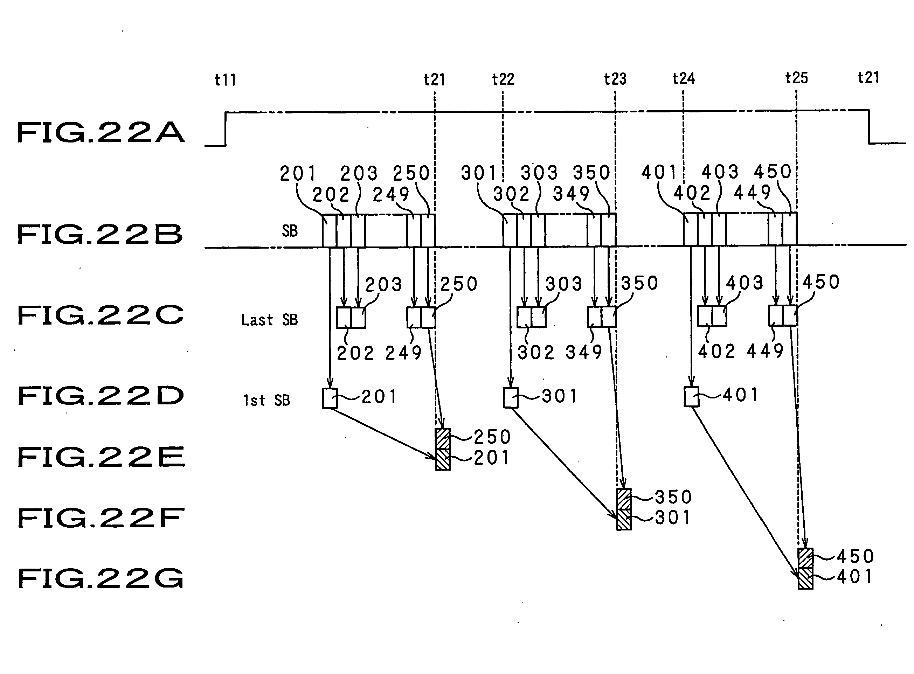

FIG 22A to FIG 22G schematically explaining the process of the flowchart shown in FIG 16. FIG 22A shows the head-switching pulse. FIG 22B shows the SB-detection signal. FIG 22C indicates the content of the register Lj, and FIG 22D indicates the content of the register Fj. FIG 22E indicates the contents of the registers F0 and L0. FIG 22F depicts the contents of the registers F 1 and L 1. FIG 22G shows the contents of the registers F2 and L2. In FIG 22B to 22C, the numbers are the ID numbers ofSBs.

As FIG 22A shows, the process (i.e., Step S23) starts when the head-switching pulse rises at time t11. The data of SB201 that has been detected first is stored in the register F0. SB202 detected next is stored in the register L0 (in Step S29). Then, the data of SBs further read sequentially is written over the data in the register L0 (Steps S24 to S29).

SBs are no longer detected continuously after time t21 when SB250 is detected. Hence, if the condition for the continuation data N is satisfied and the SB No. in the register L0 is equal to or greater than SB No. A (in Step S31), the count of the counter j is incremented (Step S33). As a result, the contents of the registers F0 and L0 are ascertained as shown in FIG. 22E.

Subsequently, SB301 is detected at time t22. The data of SB301 is stored in the register F1. SB302 detected next is stored in the register L 1 (Step S29). Thereafter, the data of SBs read one after another is written over in the register L1 (Steps S24 to S29).

After time t23 when SB350 is detected, SBs are no longer detected continuously. Hence, if the continuation SB number is satisfied and the SB No. in the register L1 is equal to or greater than SB No. A (in Step S31), the count of the counter j is incremented (Step S33). As a result, the contents of the registers F1 and L1 are ascertained as shown in FIG 22F.

At time t24, SB401 is detected. The data of SB401 is stored in the register F2. SB402 detected next is stored in the register L2 (Step S29). The data of SBs sequentially read thereafter is written over in the register L2 (Steps S24 to S29).

After time t25 when SB450 is detected, SBs are no longer detected continuously. Hence, if the continuation SB number is satisfied and the SB No. in the register L2 is equal to or greater than SB No. A (in Step S31), the count of the counter j is incremented (Step S33). As a result, the contents of the registers F2 and L2 are ascertained as shown in FIG 22G In the case of FIG 22, 50 continuous SBs constituted one data block. The number of SBs that constitute one data block is not limited to this.

The process will be described, referring back to the flowchart of FIG 15.

In Step S4, the latch-data generating unit 62 receives the SYNC/ID detection data transmitted from the SYNC/ID/search-data detecting unit 22 in Step S3. In Step S5, the latch-data generating unit 62 generates latch data from the SYNC/ID/detection data.

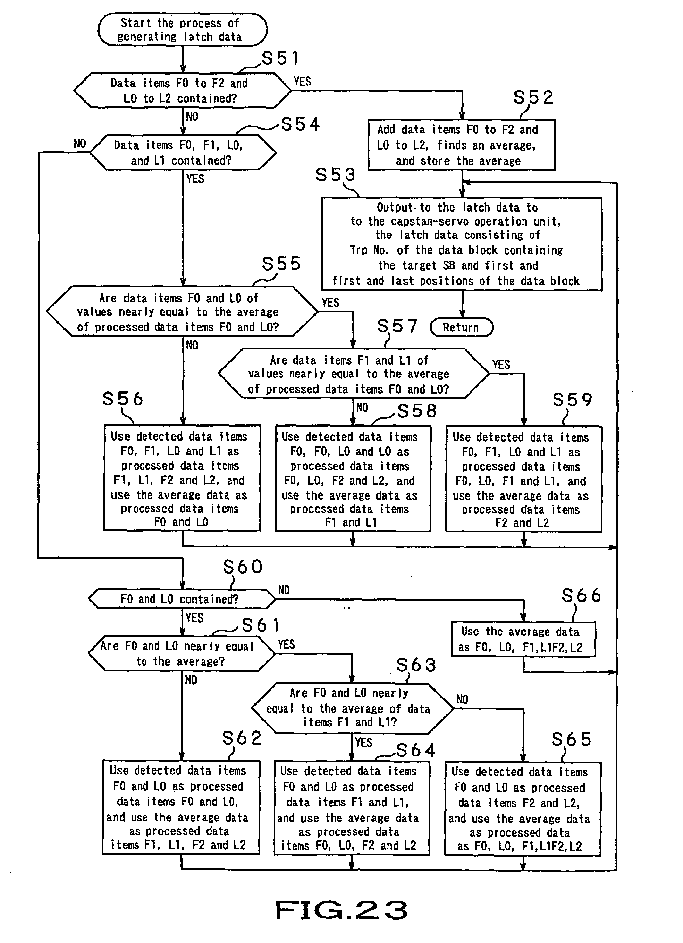

How the latch-data generating unit 62 generates latch data will be explained, with reference to the flowchart of FIG 23. In the following explanation, the data of Block0FirstSB will be referred to as detected data F0, the data of Block0LastSB as detected data L0, the data of Block1FirstSB as detected data F1, the data of Block1LastSB as detected data L1, the data of Block2FirstSB as detected data F2, and the data of Block2LastSB as detected data L2.

In Step S51, the latch-data generating unit 62 determines whether the SYNC/ID detection data contains detected data items F0 to F2 and L0 to L2. As has been described with reference to the flowchart of FIG 15, the SYNC/ID detection data does not always contain the data of three data blocks. Therefore, it is determined whether any data block has not been detected. More specifically, the error flags in the SYNC/ID detection data are examined. If all error flags are 1, it is confirmed that the SYNC/ID detection data is complete. If data of all blocks exists, that is, if the detection data contains the detected data items F0 to F2 and L0 to L2, the process goes to Step S52.

In Step S52, the latch-data generating unit 62 handles the detected data items F0 to F2 and L0 to L2 as data items to process. The unit 62 adds the detected data items F0 to F2 and L0 to L2, finds an average of these data items and stores the average.

In Step S53, the latch-data generating unit 62 refers to the detected data items F0 to F2 and L0 to L2, and latches the average SB No. of two SBs at the first and last positions of the data block containing the SB No. detected. The unit 62 then outputs the average SB No. and the Trp No. of the data block, as latch data, to the capstan-servo operation unit 71.

In Step S51, it may be determined that the detection data contains none of detected data items F0 to F2 and L0 to L2. If this is the case, the process goes to Step S54.

In Step S54, the latch-data generating unit 62 determines whether the SYNC/ID detection data contains the detection data items F0, L0, F 1 and L 1. If the SYNC/ID detection data contains, for example, the detected data items F0, L0, F 1 and L1, the process goes to Step S55.

In Step S55, the latch-data generating unit 62 determines whether the detected data items F0 and L0 contained in the SYNC/ID detection data are of values nearly equal to the average of the processed data items F0 and L0 stored in the unit 62. The detected data items F0 and L0 may be found not to be nearly equal to the average of the processed data items F0 and L0 stored in the unit 62. In this case, the latch-data generating unit 62 uses the detected data items F0, L0, F1 and L1 as processed data items F1, L1, F2 and L2 from the SYNC/ID detection data and uses the average of the processed data items F0 and L0. The process then goes to Step S53.

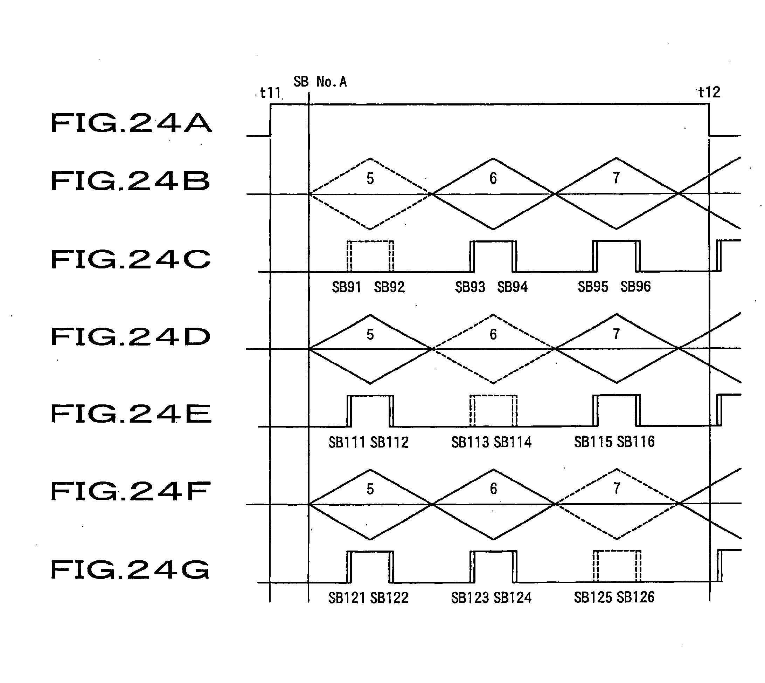

That is, if the SYNC/ID detection data contains two data blocks only, the detected data items F0 and L0 and the detected data items F 1 and L 1 will never be exchanged in time sequence. Hence, unless the detected data items F0 and L0 have a value nearly equal to the average, the data of the first data block (i.e., a block corresponding to Trp No. 5 if it may correspond to Trp No. 5, Trp No. 6 or Trp No. 7) is regarded as not having been detected. It follows that, in the case of FIGS. 24A to 24C, the data items corresponding to SB91 and SB92 are processed data items F0 and L0. The latch-data generating unit 62 generates these data items F0 and L0 from the average value stored in it The unit 62 uses the detected data items F0, L1, F1 and L 1 as the following processed data items F1, L1, F2 and L2 for SBs 93, 94, 95 and 96. In the comparison with the average value, the absolute value of the difference between the average of the detected data items and the average of the processed data items may be obtained. If the absolute value is equal to or less than a threshold value, it will be determined as nearly equal to the average value. If the absolute value exceeds the threshold value, it will be determined not to be nearly equal to the average value.

FIG 24A shows the head-switching pulse, FIG 24B shows an RF signal, FIG 24C shows an SB-detection signal, FIG 24D shows an RF signal, FIG 24E shows an SB-detection signal, FIG 24F shows an RF signal, and FIG 24G shows an SB-detection signal.

In Step S55, it may be determined that the detected data items F0 and L0 contained in the SYNC/ID detection data are nearly equal to the average of the processed data items F0 and L0 stored in the latch-data generating unit 62. In this case, the latch-data generating unit 62 determines in Step S57 whether the detected data items F1 and L contained in the SYNC/ID detection data are nearly equal to the average of the processed data items F 1 and L 1 stored in the unit 62. For example, it may be determined in Step S57 that the detected data items F1 and L1 contained in the SYNC/ID detection data are not nearly equal to the average value stored in the unit 62, the block corresponding to Trp No. 6 will not be detected in the detected data items F 1 and L 1 contained in the SYNC/ID detection data, as is illustrated in FIG 24D and FIG 24E. In this case, the block corresponding to Trp No. 7 is detected. In Step S58, the latch-data generating unit 62 uses the detected data items F0, L0, F 1 and L 1 contained in the SYNC/ID detection data as processed data items F0, L0, F2 and L2, and uses the average of the processed data items F 1 and L1. The process goes to Step S53. That is, in the case shown in FIG 24D and FIG 24E, the processed data items F0 and L0 are the detected data items F0 and L0 that are contained in the SYNC/ID detection data and corresponding to SB 111 and SB 112, the processed data items F 1 and L1 are the average of the processed data items F 1 and L0 that correspond to SB 113 and SB 114, respectively, and the processed data items F2 and L2 are the detected data items F 1 and L 1 that are contained in the SYNC/ID detection data and corresponding to SB 115 and SB 116.

In Step S57, it may be determined that the data items F 1 and L 1 contained in the SYNC/ID detection data are nearly equal to the average value stored in the latch-data generating unit 62. If this is the case, the data of the last block corresponding to Trp No. 7 is regarded as not having been read as shown in FIGS. 24F and 24G In Step S59, the latch-data generating unit 62 uses the detected data items F0, L0, F 1 and L 1 contained in the SYNC/ID detection data, as processed data items F0, L0, F1 and L1, and uses the average of the processed data items F2 and L2 as processed data items F2 and L2. The process goes to Step S53. That is, in the case shown in FIG 24F and FIG 24G, the detected data items F0 and L0 contained in the SYNC/ID detection data and corresponding to SB121 and SB122 are used as processed data items F0 and L0, the detected data items F and L 1 contained in the SYNC/ID detection data and corresponding to SB123 and SB124 are used as processed data items F 1 and L1, and the average of the processed data items F2 and L2 corresponding to SB 125 and SB 126 are used as processed data items F2 and L2.

In Step S54, it may be detected that the SYNC/ID detection data does not contain the processed data items F0, L0, F 1 and L1. If this is the case, the process goes to Step S60. In Step S60, the latch-data generating unit 62 determines whether the SYNC/ID detection data contains the detected data items F0 and L0. If the data contains these detected data items, the process goes to Step S61.

In Step S61, the latch-data generating unit 62 determines whether the detected data items F0 and L0 contained in the SYNC/ID detection data are nearly equal to the average of the processed data items F0 and L0. If they are nearly equal to the average, the process goes to Step S62.

In Step S62, the latch-data generating unit 62 regards the detected data items F0 and L0 contained in the SYNC/ID detection data, as the data of the first data block. The unit 62 uses the detected data items F0 and L0 in the SYNC/ID detection data, as processed data items F0 and L0, and uses the average of the processed data items F1, L1, F2 and L2 as these processed data items. The process goes to Step S53.

In Step S61, it may be determined that the detected data items F0 and L0 contained in the SYNC/ID detection data are not nearly equal to the average of the processed data items F0 and L0. If so, the process goes to Step S63. In Step S63, the latch-data generating unit 62 determines whether the detected data items F0 and L0 contained in the SYNC/ID detection data are nearly equal to the average of the processed data items F1 and L1. If they are nearly equal to the average of the processed data items F1 and L1, the process goes to Step S64.

In Step S64, the latch-data generating unit 62 regards the detected data items F0 and L0 contained in the SYNC/ID detection data, as data of the second data block Then, the unit 62 uses the detected data items F0 and L0 contained in the SYNC/ID detection data, as processed data items F 1 and L 1, and uses the average of the detected data items F0 and L0 as processed data items F0, L0, F2 and L2. The process goes to Step S53.

In Step S63, it may be determined that the detected data items F0 and L0 contained in the SYNC/ID detection data are not nearly equal to the average of the processed data items F 1 and L1. If so, the latch-data generating unit 62 regards, in Step S65, that detected data items F0 and L0 contained in the SYNC/ID detection data, as data of the third data block. The unit 62 uses the detected data items F0 and L0 contained in the SYNC/ID detection data, as processed data items F2 and L2, and uses the average of the detected data items F0 and L0 as processed data items F0, L0, F1 and L1. The process goes to Step S53.

In Step S60, it may be determined that the SYNC/ID detection data contains neither the detected data item F0 nor the detected data item L0. If this is the case, the SYNC/ID detection data is regarded as not containing any data of the data block in Step S66. The unit 62 uses the average of all processed data items F0 to F2 and L0 to L2. The process goes to Step S53.

As described above, the data items F0 to F2 and L0 to L2 (contained in the SYNC/ID detection data) may not be detected in some cases. Hence, the latch-data generating unit 62 generates processed data items F0 to F2 and L0 to L2 equivalent to the detected data of three data blocks, from the detected data items F0 to F2 and L0 to L2, thus generating latch data.

The process will be further described, referring back to the flowchart of FIG 15.

In Step S6, the capstan-servo operation unit 71 determines from the latch data supplied from the latch-data generating unit 62, whether or not the detected SB is contained in the target Trp (i.e., data block). That is, in the 24-times fast reproduction, for example, it is determined whether or not the SB (i.e., the Jth SB detected from the leading edge of the head-switching pulse) detected is contained in Trp No. 6, as explained with reference to FIG 13. Therefore, in Step S6, it is determined whether the latch data assumes the state shown in FIG 13G to 13J (i.e., the state shown in FIGS. 13B to 13F and FIGS. 13K to 13N).

In Step S6, the SB detected may be found to be in the target Trp, or to assume the state shown in FIG 13G to 13J in, for example, the 24-times fast reproduction. Then, the process goes to Step S7.

In Step S7, the capstan-servo operation unit 71 determines whether the movable contact of the switch 113 is connected to the terminal 113b. If the movable contact is found connected to the terminal 113b, the process returns to Step S1. If the movable contact is found not connected to the terminal 113b, it is connected to the other terminal 113a. In Step S8, the movable contact is switched from the terminal 113a to the terminal 113b.

In Step S6, it may be determined that the SB detected is not in the target Trp. In the 24-times fast reproduction, for example, the process goes to Step S9 if the latch data assumes the state shown in FIGS. 13B to 13F and FIGS. 13K to 13N. The process then goes to Step S9.

In Step S9, it is determined whether the movable contact of the switch 113 is connected to the terminal 113a. If the contact is found connected to the terminal 113a, the process returns to Step S1. If the contact is found not connected the terminal 113a, the contact is connected to the other terminal 113b. In this case, the movable contact is switched from the terminal 113b to the terminal 113a.

Thus, the capstan-servo operation unit 71 determines, from the latch data, the timing at which the SB detected (i.e., the SB read now) has been read If the SB has been read in the Trp, the movable contact of the switch 113 is connected to the terminal 113b so that the phase error may be calculated in units of SBs. If SB has been read outside the Trp, the movable contact of the switch 113 is connected to the terminal 113a so that the phase error may be calculated in units ofTrps.

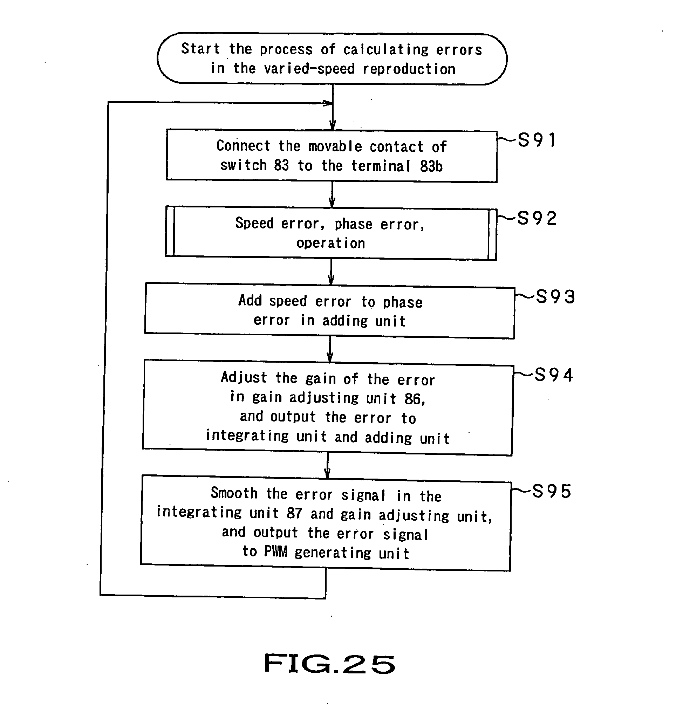

Next, how the capstan-servo operation unit 71 calculates the error in the varied-speed reproduction will be explained, with reference to the flowchart of FIG 25.

In Step S91, the capstan-servo operation unit 71 connects the movable contact of the switch 83 to the terminal 83a.

In Step S92, the speed-error calculating unit 81 and the phase-error calculating unit 82 calculate a speed error and a phase error, respectively. The speed error is supplied from the speed-error calculating unit 81 to the adding unit 85, and the phase error is supplied from the phase-error calculating unit 82 via the switch 83 to the adding unit 85, too. The adding unit 85 adds the speed error and the phase error.

The processes that the speed-error calculating unit 81 and phase-error calculating unit 82 perform will be explained.

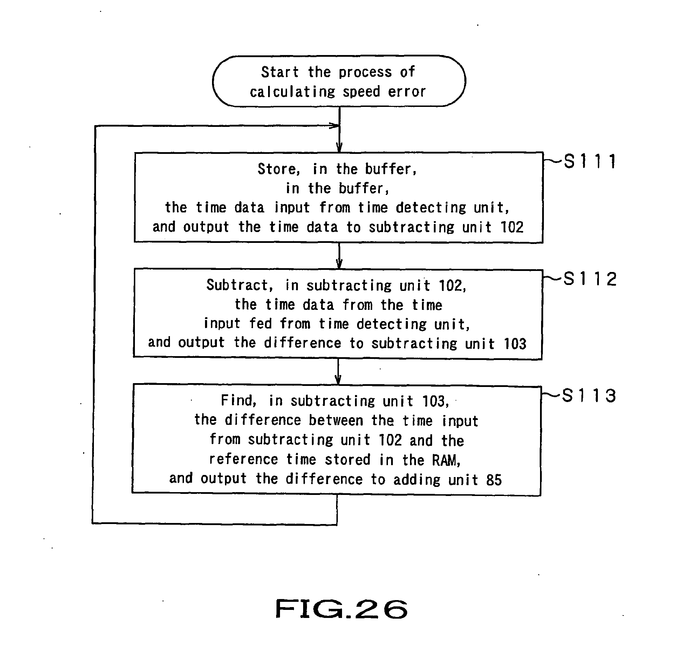

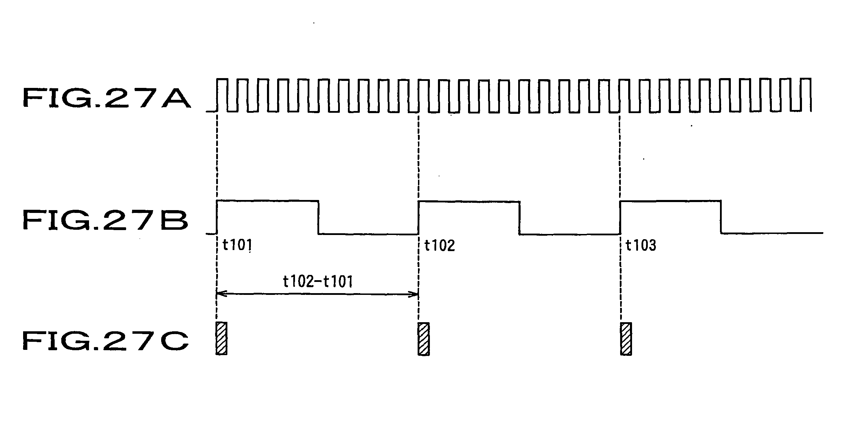

First, how the phase-error calculating unit 82 calculates the speed error will be described, with reference to the flowchart of FIG 26. In Step S111, the buffer 101 stores the time data A input from the time detecting unit 65 and outputs the previous time data it has stored to the subtracting unit 102. For example, the capstan-motor rotation detection pulse input from the capstan-motor rotation detecting unit 33 may be the pulse shown in FIG 27A. In this case, the frequency divider 64 generates a pulse by dividing the detection pulse by 10, as shown in FIG 27B. The time at which the time detecting unit 65 detects the leading edge of this pulse is time data B. If the pulse rises at time t102, the time data representing time t102 is input to the buffer 101 and the subtracting unit 102. The buffer 101 outputs the time data representing time t101, which it has been holding, to the subtracting unit 102.

In Step S 112, the subtracting unit 102 finds the difference between the time data input from the buffer 101 and the time data input from the time detecting unit 65. The unit 102 outputs this difference, as present rotation cycle of the capstan motor, to the subtracting unit 103. That is, the time (t102 -t101), i.e., difference between time t101 and time t102, which is the time data input from the buffer 101, is output, as the present rotation cycle of the capstan motor, to the subtracting unit 103.

In Step S 113, the subtracting unit 103 finds the difference between the reference rotation cycle previously stored in the ROM 202 and the present rotation cycle of the capstan motor (in this case, t102 - t101). This difference is output, as speed error, to the adding unit 85.

The speed-error calculating unit 81 performs this process at the time the capstan-motor rotation detection pulse rises as shown in FIG 27B. Hence, the process is performed at the leading edge of the pulse obtained shown in FIG 27B by dividing the detection pulse, as is illustrated in FIG 27C.

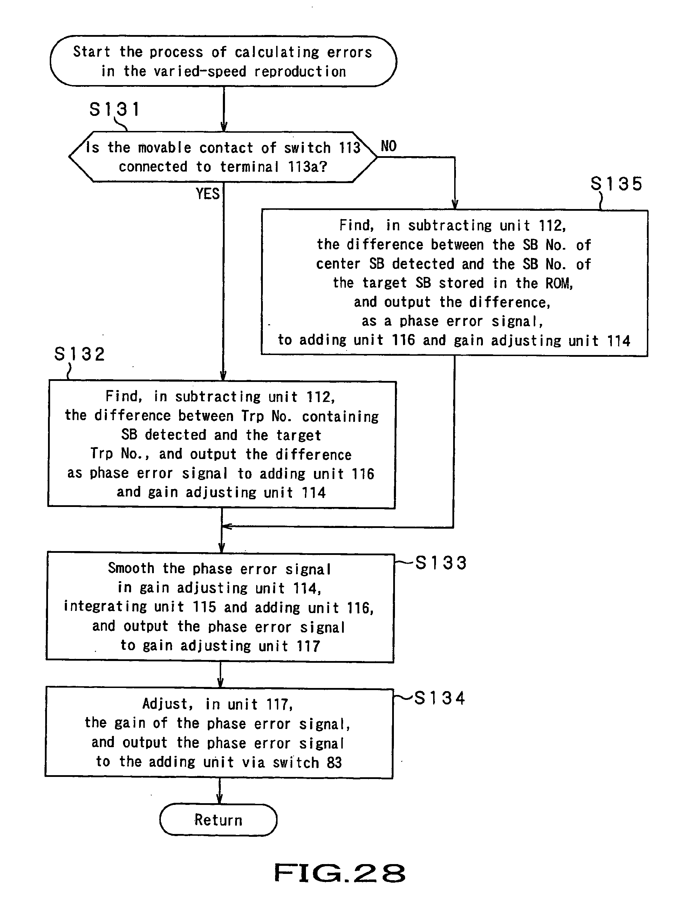

How the phase-error calculating unit 82 calculates the phase error will be described, with reference to the flowchart of FIG. 28.

In Step S 131, it is determined whether the movable contact of the switch 113 is connected to the terminal 113a or not If the movable contact is found to be connected to the terminal 113a so that the phase error may be calculated in units ofTrps, the process goes to Step S 132.

In Step S 132, the subtracting unit 111 of the capstan-servo operation unit 71 finds, on the basis of the latch data, the difference between the Trp No. containing the SB detected (e.g., SB No. J shown in FIG 13) and the target Trp No. stored in the ROM 202. This difference is output, as a phase-error signal, via the switch 113 to the gain adjusting unit 114 and the adding unit 116.

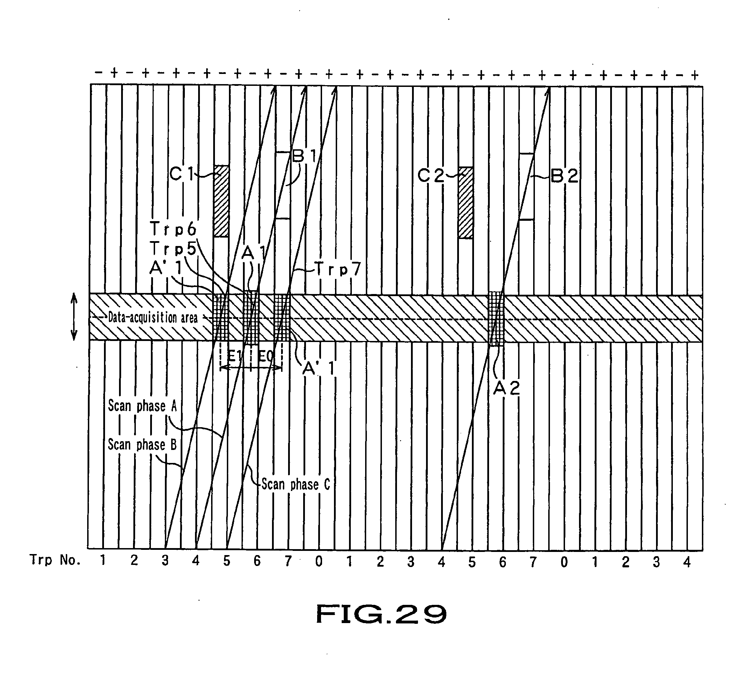

The phase error, which is defined in units ofTrps, will be described with reference to FIG 29. FIG 29 depicts the configuration of the data to be reproduced in the 8-times fast reproduction. Data block A1 is a data block that contains SB data to be reproduced in the 8-times fast reproduction. The rotary head 18 having a negative (-) azimuth angle passes the data block A 1 of Trp No. 6, recorded at a negative azimuth angle, when the head 18 scans the tack in the direction of the arrow along the scan phase A. The data to be reproduced in the 8-times fast reproduction is recorded at the same position, in units of 8 Trps. (In FIG 29, block A2 lies in a similar manner.) The head 18 reads these blocks continuously, accomplishing the varied-speed reproduction.

The scan phase may be displaced due to the state in which the magnetic tape 35 is running, and the rotary head 18 may scan the track along, for example, the scan phase B. If so, the head 18 passes over the data block A' 1 ofTrp No. 5, in the data-acquisition area over which it passes at the same time. In this case, the phase error, i.e., difference between the scan phase A and the scan phase B, is E1 shown in FIG 29. Thus, E1=Trp No. 6 (target Trp No.)- Trp. No. 5 =1 Trp. If the magnetic head scans the track along, for example, the scan phase C, it will pass over the data blockA"1 of Trp No. 7 in the data-acquisition area over which it passes at the same time. Hence, the phase error, i.e., difference between the scan phase A and the scan phase C is E0 in the figure. E0 = Trp No. 6 (target Trp No.)- Trp. No. 7 = -1 Trp. Thus, a phase error is output in units of Trps.

In Step S 133, the gain adjusting unit 114, integrating unit 115 and adding unit 116 smooth the signal input from the subtracting unit 111 and representing the phase error. The signal smoothed is output to the gain adjusting unit 117.

In Step S 134, the gain adjusting unit 117 adjusts the gain of the phase-error signal. The signal adjusted in gain is output via the switch 83 to the adding unit 85.

In Step S 131, it may be determined that the movable contact of the switch 113 is not connected to the terminal 113a. That is, the movable contact of the switch 113 is connected to the terminal 113b so that the phase error may be calculated in units of SBs. In this case, the process goes to Step S 135.

In Step S135, the subtracting unit 112 of the capstan-servo operation unit 71 finds, on the basis of the latch data, the difference between the SB No. of the SB detected (e.g., SB No. J shown in FIG 13) and the target SB No. stored in the ROM 202, in units of SBs. This difference is output, as a phase-error signal, via the switch 113 to the gain adjusting unit 114 and the adding unit 116.

As explained with reference to the flowchart of FIG 15, a phase error is detected in units of SB Nos. if the data block containing the SB detected is found in the target Trp. Therefore, the phase error detected is an error within the target Trp and defined in units of SBs.

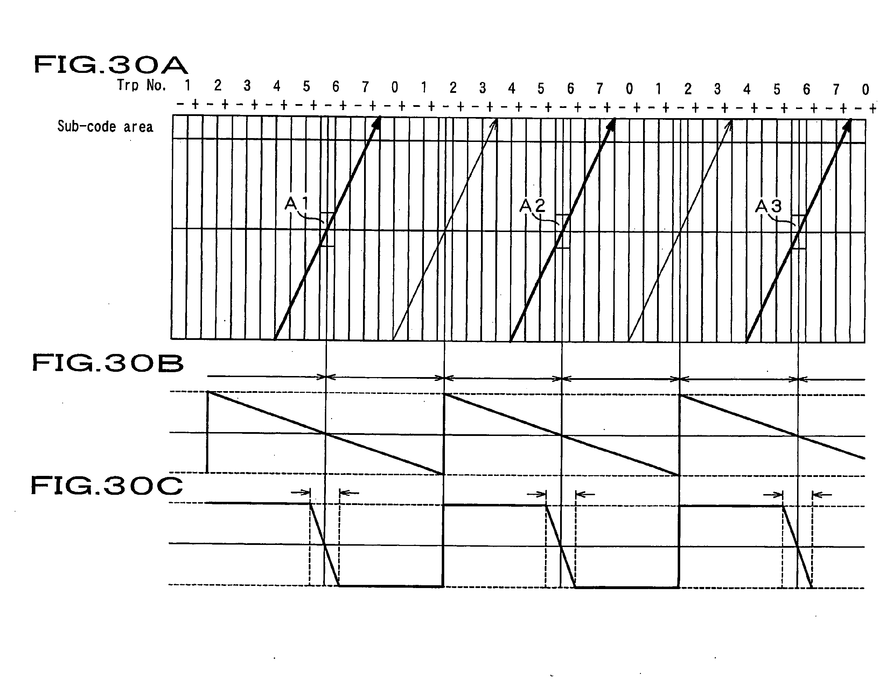

FIG 30A to FIG 30C represent the relation between a phase error detected in units ofTrps and the phase error detected in units SBs, for a scan phase. FIG 30A depicts scan phases and blocks A1 to A3. The blocks A1 to A3 include SBs that undergo the 8-times fast reproduction. (They are tracks that the magnetic head having a negative (-) azimuth angle scans.) In FIG 30, the thick lines indicate the scan phases of the rotary head 18 having a negative (-) azimuth angle, and the thin lines indicate the scan phases of the rotary head 18 having a positive (+) azimuth angle. FIG 30B shows the transition of the phase error in units ofTrps, for each scan phase. Plotted on the abscissa is the Trp No. that intersects with the center lines of scan phases of the rotary head 18 having the azimuth angle indicated by a thick line. Plotted on the ordinate is the number of Trps, which indicates the phase error. As shown in FIG 30B, the scan phase cyclically changes. For Trp No. 6 to Trp No. 2, it represents a high running speed of the magnetic tape 35. For Trp No. 2 to Trp No. 6, it represents a low running speed of the magnetic tape 35.

FIG 30C shows a phase error in units of SBs. In this case, the phase error changes by one Trp with respect to the track for Trp No. 6, which has a negative (-) azimuth angle, and has a fixed upper limit (Max) and a fixed lower limit (Min). That is, it suffices to represent only the phase-error transition in the target Trp. Hence, the upper limit and the lower limit only need to have the same absolute value. The phase error is changed in units of SBs, between the upper limit and the lower limit. The capstan-servo operation is performed in order to reduce the phase error to zero (0).

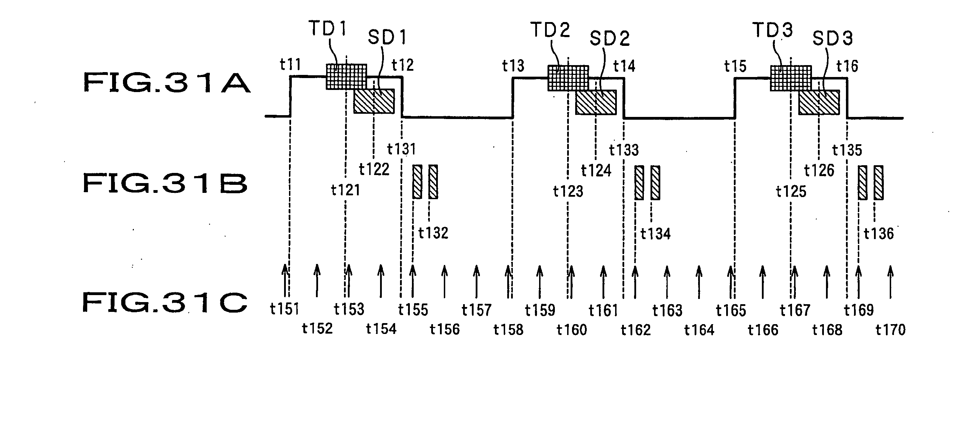

FIG 31A to FIG 31C show the timing of the process described above. FIG. 31A depicts a head-switching pulse. In FIG 31A, TD1 to TD3 are blocks to be detected, and SD1 to SD3 are target data blocks. FIG 31B represents the process timing. FIG. 31C shows various times at which time data A (frequency-divided pulses) rises. Assume that the head-switching pulse rises at time t11, time t13 and time t15 as is illustrated in FIG 31A. Then, the SYNC/ID/search-data detecting unit 22 reads blocks TD1, TD2 and TD3 at time t121, time t123 and time t125, which are centers of the individual head-switching pulses. The blocks thus read are transferred, as SYNC/ID detection data, to the latch-data generating unit 62 at time t12, time t14 and time t16, respectively.

The latch-data generating unit 62 generates latch data from the SYNC/ID detection data, at time t131, t133 and t135 as shown in FIG 31B, or at time t155, t162 and t169 (FIG 31C) when the time data A rises. The latch data is transferred to the capstan-servo operation unit 71. On the basis of the latch data, the capstan-servo operation unit 71 compares the target SB No. already stored (i.e., time t122, t124 and t126) with the SB No. detected (i.e., time t121, t123 and t125). The unit 71 calculates phase errors at time t132, time t134 and time t136, and controls the rotation of the capstan motor 34. Thus, the results of the capstan-servo operation, which are based on the latch data, are applied at time t156, t163 and t170, immediately after the rotation of the capstan motor 34 has been controlled.

The process will be further described, referring back to the flowchart of FIG. 25.

In Step S93, the adding unit 85 adds the speed error supplied from the speed-error calculating unit 81, to the phase error supplied from the phase-error calculating unit 82, generating a signal. This signal is output to the gain adjusting unit 86. In Step S94, the gain adjusting unit 86 adjusts the gain of the input signal. The signal whose gain has been adjusted is output to the integrating unit 87 and the adding unit 89. In Step S95, the integrating unit 87, gain adjusting unit 88 and adding unit 89, which constitute an LPF, smoothes the signal input from the gain adjusting unit 86. The signal smoothed is output to the PWM generating unit 63. The process returns to Step S92. Steps S92 and the following steps are then repeated.

Thus, the phase error can be determined in units ofTrps, by detecting the data of only three data blocks close to the target SB. The capstan-servo process is performed on the basis of the phase error in units of Trps. The block on the target Trp is thereby read. The phase error is then determined in units of SBs. Hence, the capstan-servo process can acquire the target data in units of SBs.

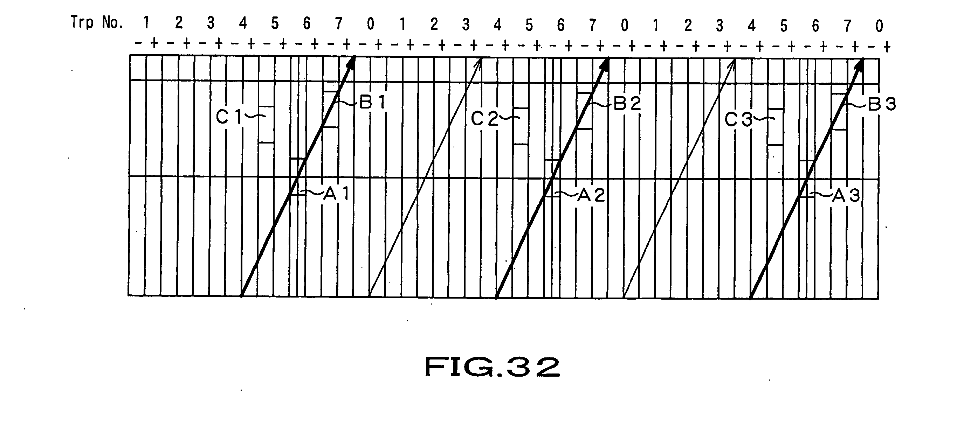

In the instance described above, the target data block is detected at a center part of the magnetic tape. Nonetheless, as shown in FIG 32, the target data block may be located on the same scan phase as data blocks B 1 to B3 but at a different position, in addition to data blocks A1 to A3. In this case, a linear displacement, if any, of the data blocks A1 to A3 due to mechanical problems can be controlled by switching the target position to the data block B1, B2 or B3. Instead, data blocks C1 to C3 to be reproduced in a varied speed in the reverse direction may be recorded.

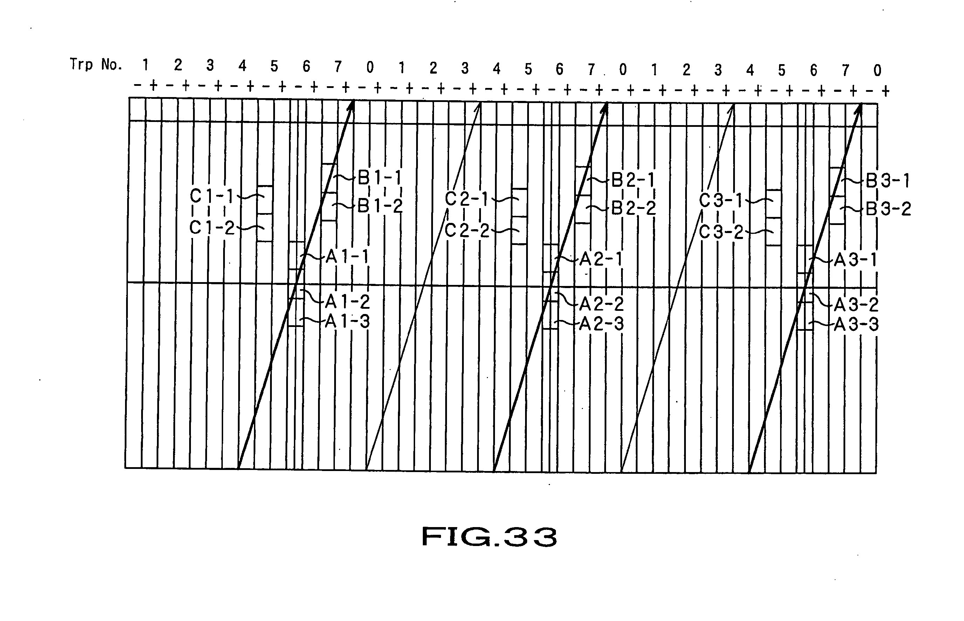

The target data blocks A 1 to A3 may be recorded three times in one track, whereby data blocks A1-1 to A1-3, data blocks A2-1 to A2-3 and data blocks A3-1 to A3-3 are recorded as illustrated in FIG 33. Then, the area the rotary head 18 can scan to read data can be expanded. As a result, the chance of making errors can be reduced. The target position can be then set in any other track that can be scanned in the same scan phase as shown in FIG 32. If this case, the number of times the data blocks are repeatedly recorded can be changed (the blocks B1 to B3 shown in FIG 33 are recorded twice). Further, the data to be reproduced at a varied speed, such as the data blocks C1-1 and C1-2, can be recorded several times. Needless to say, the number of times data is recorded on the same track for any data block is not limited to one, two or three as described above. The data can be recorded any other times, as well.

How the capstan-servo operation is performed in accordance with Trp No. has been explained. Instead, the capstan-servo operation can, of course, be performed in accordance with Tr No.

Since the servo process is carried out in units of SBs after it has been performed in units ofTrps by a phase error, the video signal recorded on the tape-shaped recording medium can be reliably reproduced in the varied-speed reproduction mode, too. Moreover, the time required to stabilize the reproduction can be shortened. In addition, the configuration for reading SBs can be simplified, because only the SBs on the Trp close to the Trp that includes the target SB are read and all SBs need not be read. Ultimately, the cost can be reduced and the data-processing speed can be raised.

However, this cannot guarantee that the sub-code data recorded near the position at which the tape pulls away from the drum is reliably read in any fast reproduction. Correct position information may not be obtained. This will possibly decrease the tracking accuracy.

In view of this, the embodiment of the present invention uses no sub-code data. Instead, the search-data acquisition information is used to lock the designated track number (i.e., the number at which the search data is written, namely Trp No. 6 for the 24-times fast reproduction) by means of phase-servo method using the SB No. If the search-data acquisition information does not show that no search data has been acquired, the tape is fed in a prescribed direction, thereby locking the track number at the next ECC. At the position remotest from the target position, this is repeated twice. Then, the track number is locked again when the search data is acquired.

A specific control method will be explained below.

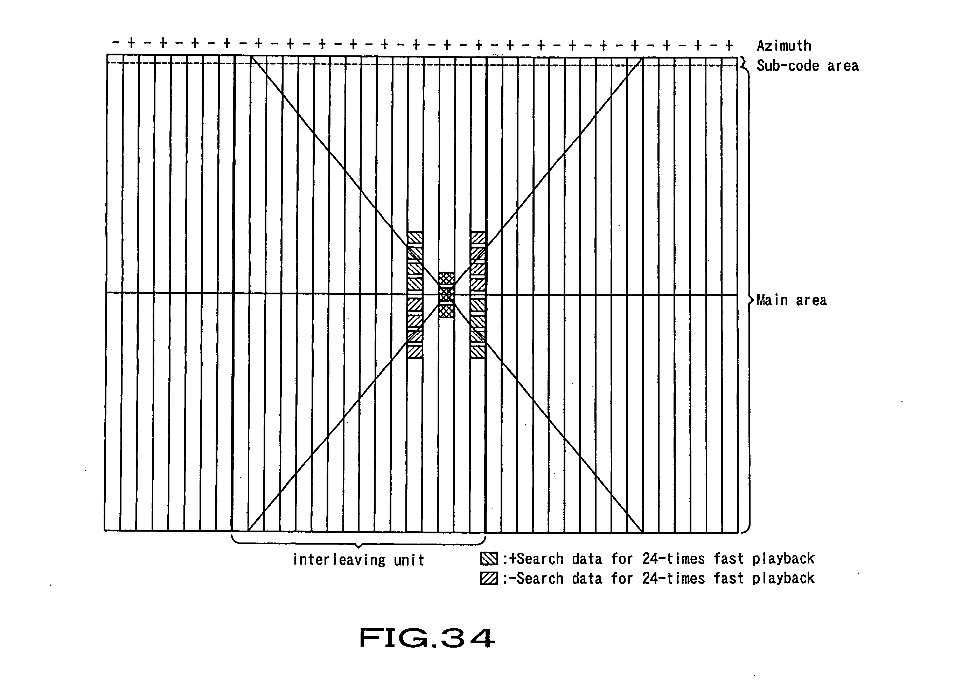

Search data for ±24-times fast reproduction is recorded once for every three interleaving units, at the positions illustrated in FIG 34.

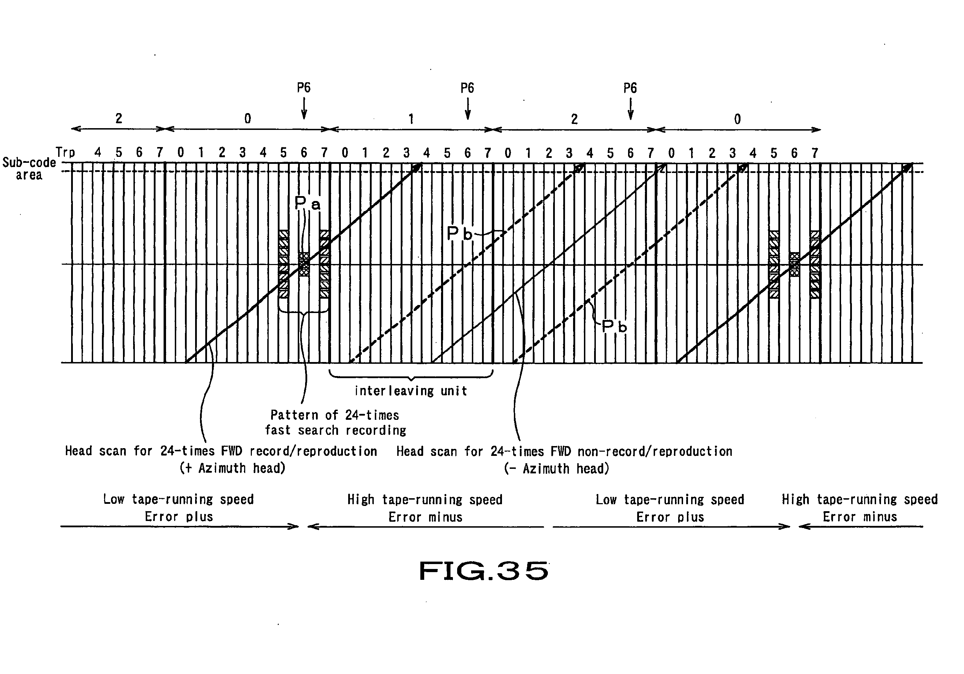

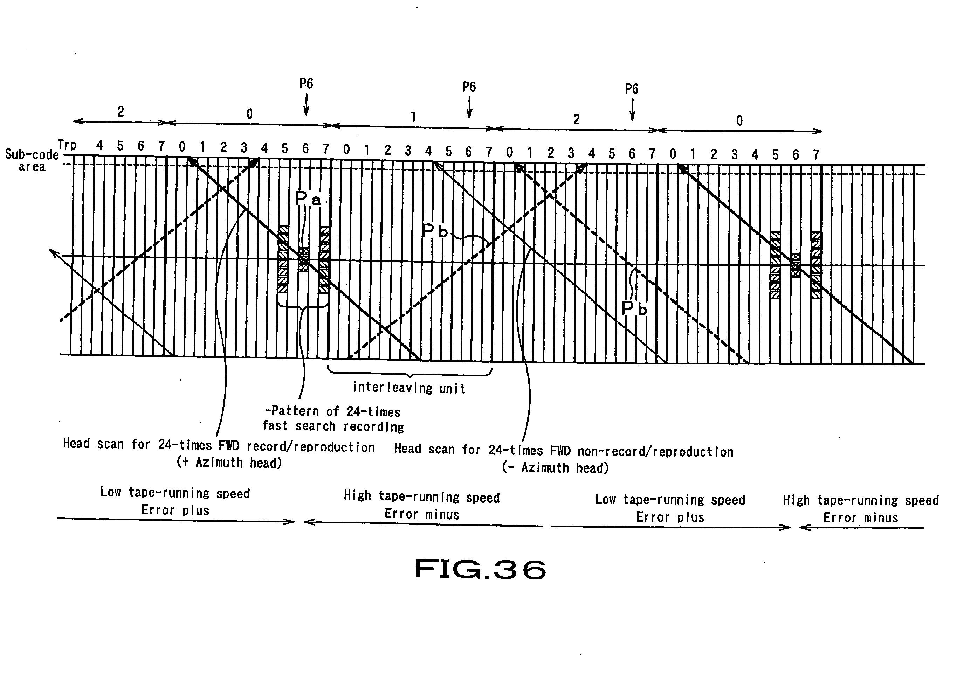

FIG 35 shows a trace pattern for the 24-times fast reproduction. FIG 36 shows a trace pattern for the -24-times fast reproduction. In FIGS. 35 and 36, Pa indicates a positive lock position, and Pb indicates a pseudo-lock position.

First, phase-servo is applied, locking the center position P6 of the Trp No. 6 in which the search data is recorded.

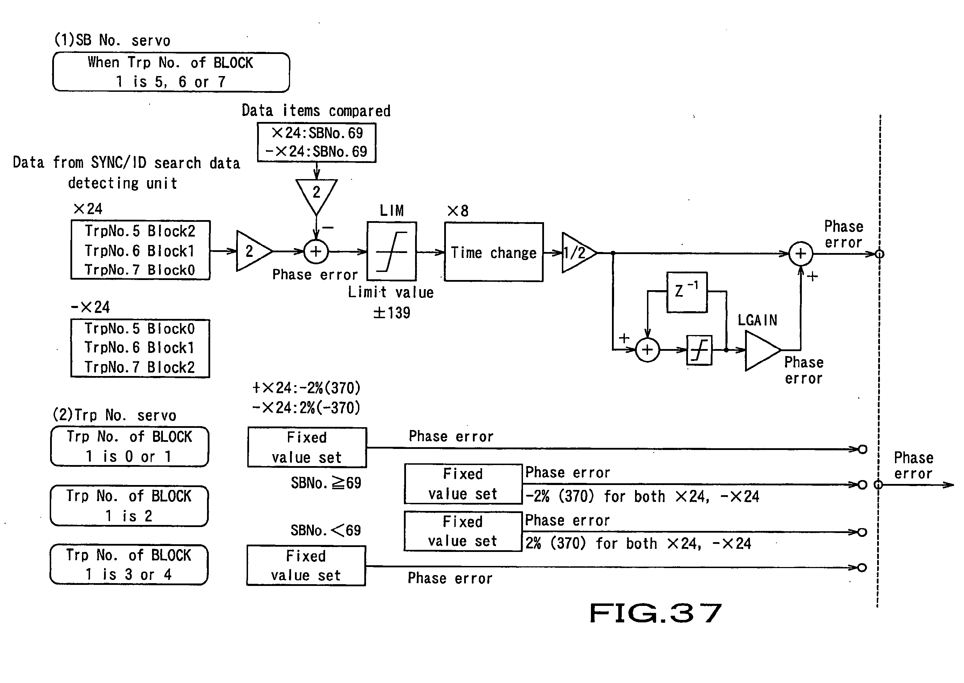

The phase-error calculating unit 82 of this embodiment performs a phase-lock servo process at 24-times speed, by using Trp No. and SB No., as seen from the phase-lock servo algorithm shown in FIG 37.

In the ±X24 mode, there are three positions where Trp No. 6 can be locked. From the acquisition information, it is determined whether any search data exists at the position where Trp No. 6 is locked first. If search data is detected, the position will be regarded as a positive lock position. If no search data is detected, the position will be regarded as a pseudo-lock position.

If the position is a pseudo-lock position, a fixed error value is output from the phase-error calculating unit 82 through the switch 118 provided on the phase-error calculating unit 82. Thus, the tape is fed at a fixed-error value (here, 2% of the speed), and phase servo is applied to Trp No. 6. At the locked position ofTrp No. 6, the search-data acquisition information is referred. If search data is detected, the position is regarded as a positive lock position. If no search data is detected, the position is regarded as a pseudo-lock position. If the position is regarded as a pseudo-lock position, the tape is fed at the fixed-error value again, and phase servo is applied at the next Trp No. 6.

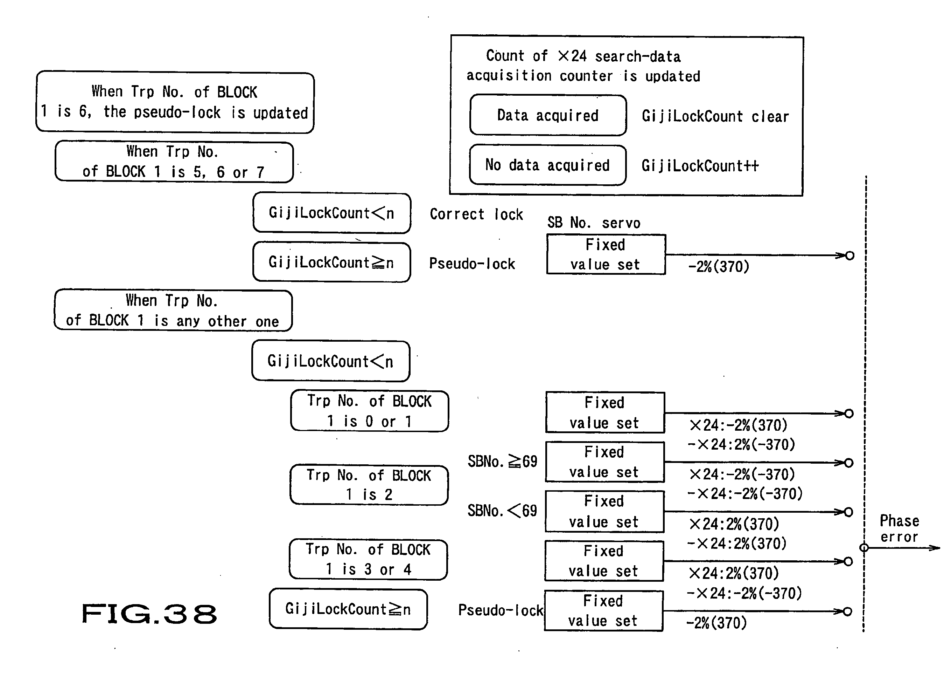

Whether the position is a positive lock position or a pseudo-lock position is determined in accordance with the algorithm of FIG. 38.

In this instance, a counter is used to determine how many times search data cannot be acquired If the search data has not been acquired n times or more times, the position will be considered as a pseudo-lock position.

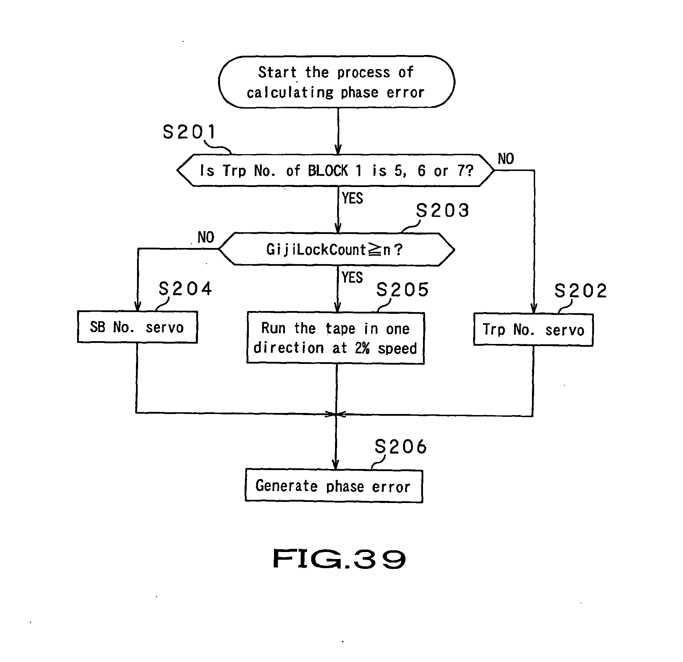

That is, the phase-error calculating unit 82 calculates phase errors in the procedure shown in the flowchart of FIG 39.

On starting the phase-error calculating process, the phase-error calculating unit 82 determines whether the Trp No. of Block1 is 5, 6 or 7 (Step S201).

If NO in Step S201, the unit 82 sets the Trp No. servo (Step S202). The unit 82 then generates a phase error (Step S206).

IfYES in Step S201, the unit 82 determines whether the value GijilockCount of the pseudo-lock counter is greater than n (Step S203).

If NO in Step S203, the unit 82 sets the SB No. servo (Step S204) and then generates a phase error (Step S206).

If YES Step S203, the unit 82 runs the tape at 2%-speed in one direction (Step S205) and generates a phase error (Step S206).

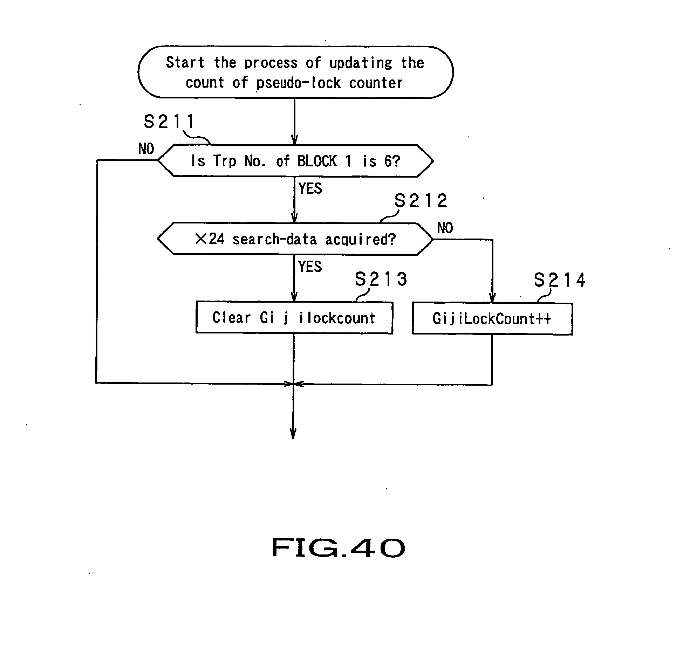

The pseudo-lock counter is updated in the procedure shown in FIG 40.

That is, to update the pseudo-lock counter, it is determined whether the Trp No. of Block1 is 6 or not (Step S211). Instead, it may be determined, in Step S211, whether the Trp No. of Block1 is 5, 6, or 7.

If YES in Step S211, it is then determined whether search data for X24-times speed has been acquired (Step S212).

IfYES in Step S212, the pseudo-lock counter is cleared (Step S213).

If NO in Step S212, the pseudo-lock counter is incremented (Step S214).

As indicated above, the sub-code data is recorded near the position at which the tape is leaving the drum. Therefore, it may not be read in the high-speed reproduction. In this case, the search-data acquisition information recorded in the middle part of the tape is used to determine whether the sub-code data is locked reliably at the target position. Thus, 24-times fast reproduction can be realized with high precision without using the sub-code data.

The sequence of process steps, described above, can be performed by hardware. It can be performed by software, as well. To make software to perform this sequence, the program constituting the software is installed into the computer that is incorporated in a dedicated hardware apparatus. Alternatively, the program may be installed from a recording medium into a general-purpose computer, such as a personal computer that can perform various functions.

This recording medium is not limited to the HDD 204 that stores a program as shown in FIG 7. Rather, it may be a package medium, such as a magnetic disc 211 (including a flexible disc) for distributing a user with a program, an optical disc 212 (including a CD-ROM (Compact Disc-Read Only Memory) and a DVD (Digital Versatile Disc)), a magnetooptical disc 213 (including an MD (Mini-Disc)), or a semiconductor memory 214 (including a Memory Stick).

In the embodiment described above, the search data is recorded in units of 3ECC. Instead, the search data may be recorded in units of nECC (where n is an integer). In this case, too, the phase-lock servo can be applied.

The present invention has been described with reference to the drawings. Nevertheless, the invention is not limited to the embodiment described above. It is obvious to those skilled in the art that various changes, replacements or equivalents to these can be made without departing from the claims appended hereto or from the scope and spirit described of the invention.

## Claims

1. A recording/reproducing apparatus in which a rotary head records digital data in tracks inclined to the lengthwise direction of a magnetic tape and reproduces the digital data recorded in the tracks, said apparatus comprising:
a recording system configured to include a first generating unit that decodes an input video signal and generates video data, and a second generating unit that generates search data from the video data, and a recording unit that records the video data and the search data on the inclined tracks of the magnetic tape; and
a reproducing system configured to include a normal reproducing unit that reproduces the video data and search data recorded on the inclined tracks of the magnetic tape, a determining unit that determines whether the search data intermittently reproduced from the tracks of the magnetic tape has been acquired in ±n-times fast reproduction, and a varied-speed reproduction control unit that performs a control, specifying, on the basis of an output of the determining unit, a position where the rotary head is now scanning the inclined tracks of the magnetic tape, locking the phase at ±n-times speed and causing the rotary head to trace the search data and reproducing the search data.

2. The recording/reproducing apparatus according to claim 1, wherein the varied-speed reproduction control unit locks the phase at an inclined track of a specified track number, determines whether the search data has been detected, runs the tape in a prescribed direction when the search data has not been acquired, locks the phase at the next error-correction block, repeats this process twice at the position remotest from a target position, and performs a control to lock the phase, when the search data is acquired.

3. A recording/reproducing method in which an input video signal is encoded, generating video data, and search data is generated from the video data, and a rotary head records the video data and the search data, as digital data, in the tracks formed on a magnetic tape and inclined to the lengthwise direction of the magnetic tape, and reproduces the digital data recorded in the inclined tracks, said method comprising:
determining whether the search data intermittently reproduced from the tracks of the magnetic tape has been acquired in ±n-times fast reproduction;
specifying, on the basis of the determination result, a position where the rotary head is now scanning the inclined tracks of the magnetic tape, locking the phase at ±n-times speed and causing the rotary head to trace the search data and reproducing the search data.

4. The recording/reproducing method according to claim 3, wherein the phase is locked at an inclined track of a specified track number, whether the search data has been detected is determined, the tape is fed in a prescribed direction when the search data has not been acquired, the phase is locked at the next error-correction block, this process is repeated twice at the position remotest from a target position, and the phase is locked when the search data is acquired.

5. A program-recorded medium storing a computer-readable program for encoding an input video signal, generating video data from the input video signal, and generating search data from the video data, and causing a rotary head to record the video data and the search data, as digital data, in the tracks formed on a magnetic tape and inclined to the lengthwise direction of the magnetic tape, and reproducing the digital data recorded in the inclined tracks, said program comprising the steps of:
determining whether the search data intermittently reproduced from the tracks of the magnetic tape has been acquired in ±n-times fast reproduction; and
specifying, on the basis of the determination result, a position where the rotary head is now scanning the inclined tracks of the magnetic tape, locking the phase at ±n-times speed and causing the rotary head to trace the search data and reproducing the search data.

6. The program-recorded medium according to claim 5, wherein the program comprising the steps of: locking the phase at an inclined track of a specified track number, determining whether the search data has been detected, running the tape in a prescribed direction when the search data has not been acquired, locking the phase at the next error-correction block, repeating this process twice at the position remotest from a target position, and locking the phase when the search data is acquired.
